# EUROPÄISCHE PATENTSCHRIFT

(11) **EP 3 224 295 B1**
(45) Veröffentlichungstag und Bekanntmachung des Hinweises auf die Patenterteilung: **10.10.2018**
(21) Anmeldenummer: 15798123.4
(22) Anmeldetag: 23.11.2015
(51) Int. Cl.: C08G 18/71, C08G 18/28, C08G 65/336, C08L 71/02, C08L 75/00

(54) **SILANGRUPPEN-HALTIGE ZUSAMMENSETZUNG MIT SCHNELLER AUSHÄRTUNG**
COMPOSITION CONTAINING SILANE GROUPS WITH FAST CURING
COMPOSITION CONTENANT DES GROUPES DE SILANES À DURCISSEMENT RAPIDE

(30) Priorität: 24.11.2014 EP 14194599
(43) Veröffentlichungstag der Anmeldung: 04.10.2017
(73) Patentinhaber: Sika Technology AG, 6340 Baar (CH)
(72) Erfinder: KRAMER, Andreas, 8006 Zürich (CH); BURCKHARDT, Urs, 8049 Zürich (CH)
(74) Vertreter: Sika Patent Attorneys
(86) Internationale Anmeldenummer: PCT/EP2015/077377
(87) Internationale Veröffentlichungsnummer: WO 2016/083312

(56) Entgegenhaltungen:
- DE-A1-102008 020 979
- DATABASE WPI Week 201126 Thomson Scientific, London, GB; AN 2011-C72194 XP002739272, & JP 2011 052066 A (KONISHI CO LTD) 17. März 2011 (2011-03-17)

## Beschreibung

### Technisches Gebiet

Die Erfindung betrifft Silangruppen-haltige Zusammensetzungen und ihre Verwendung in feuchtigkeitshärtenden Klebstoffen, Dichtstoffen oder Beschichtungen für Bau- und Industrieanwendungen.

### Stand der Technik

Silangruppen-haltige Polymere, auch als "silanfunktionelle Polymere" oder "silanmodifizierte Polymere" (SMP) oder "silanterminierte Polymere" (STP) bezeichnet, werden seit einiger Zeit erfolgreich als Bindemittel in feuchtigkeitshärtenden Zusammensetzungen eingesetzt, die insbesondere als elastische Klebstoffe, Dichtstoffe oder Beschichtungen in der Bau- und Fertigungsindustrie Verwendung finden und eine isocyanatfreie Alternative zu den traditionellen Polyurethanen darstellen.
Silanfunktionelle Polymere können sehr einfach aus Polyurethan-Polymeren erhalten werden, indem deren Isocyanatgruppen mittels Amino- oder Hydroxysilanen zu Silangruppen umfunktionalisiert werden. Solche silanfunktionellen Polyurethane vernetzen relativ rasch und härten zu nichtklebrigen Materialien von guter Festigkeit und Dehnbarkeit aus. Mit ihrem hohen Gehalt an Wasserstoffbrücken-bildenden Urethan- und/oder Harnstoffgruppen sind sie aber relativ hochviskos und deshalb nicht immer einfach verarbeitbar.
Silanfunktionelle Polymere mit tieferer Viskosität, welche frei sind von Harnstoffgruppen und nur wenige oder gar keine Urethangruppen enthalten, sind ebenfalls bekannt und sind beispielsweise durch Umsetzung von Polyetherpolyolen mit Isocyanatosilanen oder durch Hydrosilylierung von allylfunktionellen Polyethern zugänglich. Solche silanfunktionelle Polymere sind aufgrund ihrer einfachen Verarbeitbarkeit beliebt und werden deshalb von vielen Herstellern kommerziell angeboten. Allerdings sind sie deutlich reaktionsträger, vernetzen somit langsam und bleiben lange klebrig. Für eine ausreichend rasche und vollständige Aushärtung sind oft grosse Mengen an hoch aktiven Katalysatoren notwendig. Ausserdem erreichen sie nach Aushärtung meist nicht die mechanische Qualität der über Amino- oder Hydroxysilane erhaltenen silanfunktionellen Polyurethan-Polymere.
Als hoch aktive Katalysatoren werden klassischerweise Organozinn-Verbindungen eingesetzt. Diese sind aber gesundheitsschädlich und umweltgefährdend, weshalb ihr Einsatz zunehmend unerwünscht ist. Als Alternative zu Organozinn-Verbindungen werden oft Organotitanate verwendet, welche aber im Vergleich zu Organozinn-Verbindungen eine geringere katalytische Aktivität aufweisen, weshalb sie entweder in sehr hoher Dosierung oder in Kombination mit starken Basen, insbesondere cyclische Amidine wie 1,8-Diazabicyclo-[5.4.0]undec-7-en (DBU), eingesetzt werden. DBU ist aber ebenfalls ein gesundheitsschädlicher und umweltgefährdender sowie geruchsintensiver Stoff, der zudem in Zusammensetzungen auf Basis von silanfunktionellen Polymeren nur beschränkt verträglich ist, so dass diese zu Separation, Ausschwitzen oder Substratverschmutzung neigen.
DE 10 2008 020979 offenbart die Verwendung einer Zubereitung enthaltend mehrere silylierte Polyurethane als Klebstoff, Dichtstoff oder Beschichtungsmittel. Es besteht somit ein Bedarf nach einem niedrigviskosen silanfunktionellen Polymersystem mit hoher Vernetzungsgeschwindigkeit.

### Darstellung der Erfindung

Aufgabe der vorliegenden Erfindung ist es daher, ein silanfunktionelles Polymersystem zur Verfügung zu stellen, welches eine tiefe Viskosität aufweist und auch ohne den Einsatz EHS-kritischer Katalysatoren wie Organozinn-Verbindungen oder DBU schnell vernetzt und dabei zu einem nichtklebrigen Material von guter Festigkeit und Dehnbarkeit aushärtet.
Überraschenderweise wurde gefunden, dass eine Zusammensetzung von zwei verschiedenen silanfunktionellen Polymeren nach Anspruch 1 diese Aufgabe löst. Sie ist einfach herstellbar, gut lagerfähig, weist eine tiefe Viskosität auf und härtet mit Feuchtigkeit überraschend schnell zu einem elastischen Material mit guter Festigkeit, Dehnbarkeit und Wärmebeständigkeit aus, auch wenn als Katalysator nur ein Organotitanat ohne zusätzliche starke Base vorhanden ist. Überraschend ist insbesondere die Tatsache, dass sich die hohe Reaktivität des einen Polymers schon bei geringen Anteilen auf das andere, reaktionsträgere Polymer überträgt und die Zusammensetzung trotz der unterschiedlich reaktiven Silangruppen der beiden Polymere bei der Aushärtung ein Material mit guten mechanischen Eigenschaften bildet.
Ein weiterer Gegenstand der Erfindung ist eine Methode nach Anspruch 15. Mit dieser Methode ist es möglich, niedrigviskose, aber reaktionsträge silanfunktionelle Polymere ohne den Einsatz von Organozinn-Verbindungen oder starken Basen wie DBU in der Aushärtung stark zu beschleunigen und zugleich deren Festigkeit und Elastizität zu erhöhen.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine Zusammensetzung umfassend
- mindestens ein silanfunktionelles Polymer P1; und
- mindestens ein silanfunktionelles Polymer P2 mit Endgruppen der Formel (I), 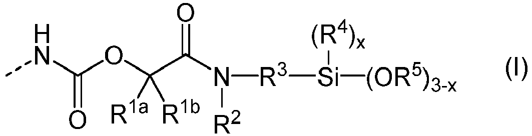 wobei
   R^{1a} und R^{1b} unabhängig voneinander jeweils für ein Wasserstoffatom oder einen einwertigen Kohlenwasserstoffrest mit 1 bis 12 C-Atomen, oder zusammen für einen Alkylenrest mit 2 bis 6 C-Atomen stehen,
   R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
   R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
   R⁴ für einen Alkylrest mit 1 bis 8 C-Atomen steht,
   R⁵ für einen Alkylrest mit 1 bis 10 C-Atomen, der gegebenenfalls Ethergruppen enthält, steht, und
   x für 0, 1 oder 2 steht;
   wobei das Gewichtsverhältnis zwischen dem silanfunktionellen Polymer P1 und dem silanfunktionellen P2 im Bereich von 99:1 bis 10:90 liegt, und wobei das silanfunktionelle Polymer P1 keine Endgruppen der Formel (I) aufweist.

Im vorliegenden Dokument bezeichnet der Begriff "Alkoxysilangruppe" oder kurz "Silangruppe" eine an einen organischen Rest gebundene Silylgruppe mit einem bis drei, insbesondere zwei oder drei, hydrolysierbaren Alkoxy-Resten am Silicium-Atom. Als "Methoxysilangruppe" wird eine Silangruppe bezeichnet, die als Alkoxy-Reste ausschliesslich Methoxy-Reste aufweist. Als "Ethoxysilangruppe" wird eine Silangruppe bezeichnet, die als Alkoxy-Reste ausschliesslich Ethoxy-Reste aufweist.
Der Begriff "Alkoxysilan" oder kurz "Silan" bezeichnet eine organische Verbindung, welche mindestens eine Silangruppe aufweist.
Als "Hydroxysilan", "Isocyanatosilan", "Aminosilan" bzw. "Mercaptosilan" werden Silane bezeichnet, die am organischen Rest zusätzlich zur Silangruppe eine oder mehrere Hydroxyl-, Isocyanato-, Amino- bzw. Mercaptogruppen aufweisen.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Der Begriff "Silangruppen-haltiger Polyether" umfasst auch Silangruppen-haltige organische Polymere, welche zusätzlich zu Polyether-Einheiten auch Urethangruppen, Harnstoffgruppen oder Thiourethangruppen enthalten können. Solche Silangruppen-haltige Polyether können auch als "Silangruppen-haltige Polyurethane" bezeichnet werden.
Unter "Molekulargewicht" versteht man im vorliegenden Dokument die molare Masse (in Gramm pro Mol) eines Moleküls oder eines Teils eines Moleküls, auch als "Rest" bezeichnet. Als "mittleres Molekulargewicht" wird das Zahlenmittel Mₙ einer oligomeren oder polymeren Mischung von Molekülen oder Resten bezeichnet, welches üblicherweise mittels Gelpermeationschromatographie (GPC) gegen Polystyrol als Standard bestimmt wird.
Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs- oder Gebrauchseigenschaften, insbesondere der Viskosität und der Vernetzungsgeschwindigkeit, durch die Lagerung in einem für ihren Gebrauch relevanten Ausmass verändert.
Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in den Ausführungsbeispielen beschrieben bestimmt wird. Eine gestrichelte Linie in den Formeln in diesem Dokument stellt jeweils die Bindung zwischen einem Substituenten und dem zugehörigen Molekülrest dar. Als "Raumtemperatur" wird eine Temperatur von 23 °C bezeichnet.

Das silanfunktionelle Polymer P1 ist bevorzugt ein Polyolefin, ein Polyester, ein Polyamid, ein Poly(meth)acrylat oder ein Polyether oder eine Mischform dieser Polymere. Seine Silangruppen sind keine Endgruppen der Formel (I). Seine Silangruppen können seitlich in der Kette oder endständig vorhanden sein. Besonders bevorzugt ist das silanfunktionelle Polymer P1 ein Polyolefin oder ein Polyester oder ein Poly(meth)acrylat oder ein Polyether oder eine Mischform dieser Polymere.
Am meisten bevorzugt ist das silanfunktionelle Polymer P1 ein Silangruppen-haltiger Polyether. Er weist bevorzugt mehrheitlich Oxyalkylen-Einheiten, insbesondere 1,2-Oxypropylen-Einheiten, auf. Die Silangruppen sind bevorzugt Dialkoxysilangruppen und/oder Trialkoxysilangruppen, insbesondere Dimethoxymethylsilangruppen oder Trimethoxysilangruppen oder Triethoxysilangruppen.
Das silanfunktionelle Polymer P1 ist bevorzugt frei von Isocyanatgruppen.

Das silanfunktionelle Polymer P1 weist im Mittel bevorzugt 1.3 bis 4, insbesondere 1.5 bis 3, besonders bevorzugt 1.7 bis 2.8, Silangruppen pro Molekül auf.
Das silanfunktionelle Polymer P1 weist bevorzugt ein mittleres Molekulargewicht im Bereich von 1000 bis 30'000 g/mol, insbesondere von 2000 bis 20'000 g/mol, auf.

Das silanfunktionelle Polymer P1 ist bevorzugt bei Raumtemperatur flüssig. Besonders bevorzugt weist es eine tiefe Viskosität auf. Insbesondere liegt die Viskosität bei 20 °C im Bereich von 1 bis 200 Pa·s, bevorzugt 2 bis 100 Pa·s, besonders bevorzugt 5 bis 50 Pa·s.

Bevorzugt ist das silanfunktionelle Polymer P1 ausgewählt aus der Gruppe bestehend aus
- Silangruppen-haltigen Polyethern erhalten aus der Umsetzung von Allylgruppen-haltigen Polyethern mit Hydrosilanen, gegebenenfalls unter Kettenverlängerung, insbesondere mit Diisocyanaten;
- Silangruppen-haltigen Polyethern erhalten aus der Copolymerisation von Alkylenoxiden und Epoxysilanen, gegebenenfalls unter Kettenverlängerung, insbesondere mit Diisocyanaten;
- Silangruppen-haltigen Polyethern erhalten aus der Umsetzung von Polyetherpolyolen mit Isocyanatosilanen, gegebenenfalls unter Kettenverlängerung mit Diisocyanaten; und
- Silangruppen-haltigen Polyethern erhalten aus der Umsetzung von Isocyanatgruppen-haltigen Urethan-Polyethern mit Aminosilanen oder Hydroxysilanen oder Mercaptosilanen.
Diese silanfunktionellen Polymere P1 sind besonders gut zugänglich.

Davon bevorzugt sind die Silangruppen-haltigen Polyether erhalten aus der Umsetzung von Allylgruppen-haltigen Polyethern mit Hydrosilanen. Diese silanfunktionellen Polymere P1 sind besonders niedrigviskos und besonders reaktionsträge.

Davon weiterhin bevorzugt sind die Silangruppen-haltigen Polyether erhalten aus der Umsetzung von Polyetherpolyolen mit Isocyanatosilanen. Diese silanfunktionellen Polymere P1 sind besonders gut zugänglich, sehr niedrigviskos und eher reaktionsträge.

Weiterhin geeignet sind kommerziell erhältliche silanfunktionelle Polymere P1, insbesondere Produkte unter den Handelsnamen MS Polymer™ (von Kaneka Corp.; insbesondere die Typen S203H, S303H, S227, S810, MA903 oder S943); MS Polymer™ bzw. Silyl™ (von Kaneka Corp.; insbesondere die Typen SAT010, SAT030, SAT200, SAX350, SAX400, SAX725, MAX450, MAX602 oder MAX951); Excestar® (von Asahi Glass Co. Ltd.; insbesondere die Typen S2410, S2420, S3430 oder S3630); SPUR+* (von Momentive Performance Materials; insbesondere die Typen 1010LM, 1015LM oder 1050MM); Vorasil™ (von Dow Chemical Co.; insbesondere die Typen 602 oder 604); Desmoseal® (von Bayer MaterialScience AG; insbesondere die Typen S XP 2636, S XP 2749, S XP 2774 oder S XP 2821); TEGOPAC® (von Evonik Industries AG; insbesondere die Typen Seal 100, Bond 150 oder Bond 250); oder Geniosil® STP (von Wacker Chemie AG; insbesondere die Typen E15 oder E35).

Verfahren zur Herstellung von silanfunktionellen Polymeren P1 sind dem Fachmann bekannt.

In einem ersten bevorzugten Verfahren wird ein silanfunktionelles Polymer P1 erhalten aus der Umsetzung von Allylgruppen-haltigen Polyethern mit Hydrosilanen, gegebenenfalls unter Kettenverlängerung mit beispielsweise Diisocyanaten. Ein solches silanfunktionelles Polymer P1 weist insbesondere Endgruppen der Formel (IIa) auf, 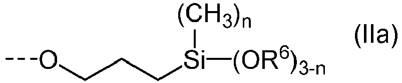 wobei
R⁶ für einen Methyl-Rest oder einen Ethyl-Rest steht und
n für 0 oder 1 oder 2 steht.

Bevorzugt steht n für 0 oder 1, insbesondere für 1, und R⁶ für einen Methyl-Rest.

In einem weiteren bevorzugten Verfahren wird ein silanfunktionelles Polymer P1 erhalten aus der Copolymerisation von Alkylenoxiden und Epoxysilanen, gegebenenfalls unter Kettenverlängerung mit beispielsweise Diisocyanaten. Ein solches silanfunktionelles Polymer P1 weist insbesondere Silangruppen der Formel (IIb) auf, 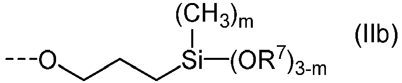 wobei
R⁷ für einen Methyl-Rest oder einen Ethyl-Rest steht und
m für 0 oder 1 oder 2 steht.
Bevorzugt steht m für 0.

In einem weiteren bevorzugten Verfahren wird ein silanfunktionelles Polymer P1 erhalten aus der Umsetzung von Polyetherpolyolen mit Isocyanatosilanen, gegebenenfalls unter Kettenverlängerung mit Diisocyanaten. Ein solches silanfunktionelles Polymer P1 weist insbesondere Silangruppen der Formel (IIc) auf, 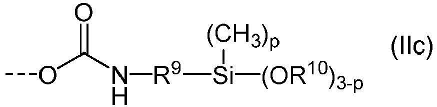 wobei
R⁹ für einen Alkylen-Rest mit 1 bis 6 C-Atomen steht,
R¹⁰ für einen Methyl-Rest oder einen Ethyl-Rest steht und
p für 0 oder 1 oder 2 steht.
Bevorzugt steht p für 0.
Bevorzugt steht R⁹ für einen 1,3-Propylen-Rest.

In einem weiteren bevorzugten Verfahren wird ein silanfunktionelles Polymer P1 erhalten aus der Umsetzung von Isocyanatgruppen-haltigen Polyethern, insbesondere NCO-terminierten Urethan-Polyethern aus der Umsetzung von Polyetherpolyolen mit einer überstöchiometischen Menge an Polyisocyanaten, mit Aminosilanen, Hydroxysilanen oder Mercaptosilanen. Dabei sind dieselben NCO-terminierten Urethan-Polyether geeignet wie für die Herstellung eines silanfunktionellen Polymers P2 mit Endgruppen der Formel (I) beschrieben.
Ein solches silanfunktionelles Polymer P1 weist insbesondere Endgruppen der Formel (IId) auf, 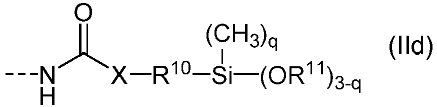 wobei
X für O oder S oder NR¹² steht, wobei R¹² für ein Wasserstoffatom oder für einen Kohlenwasserstoff-Rest mit 1 bis 20 C-Atomen, welcher gegebenenfalls cyclische Anteile aufweist und gegebenenfalls eine Alkoxysilyl- oder eine oder mehrere Ether- oder Carbonsäureestergruppen aufweist, steht,
R¹⁰ für einen zweiwertigen Kohlenwasserstoff-Rest mit 1 bis 18 C-Atomen, welcher gegebenenfalls cyclische und/oder aromatische Anteile und gegebenenfalls ein oder mehrere Heteroatome aufweist, steht,
R¹¹ für einen Alkyl-Rest mit 1 bis 5 C-Atomen, welcher gegebenenfalls eine Ethergruppe enthält, steht und
q für 0 oder 1 oder 2 steht,
wobei die Endgruppe der Formel (IId) keine Endgruppe der Formel (I) ist.

### Bevorzugt steht q für 0.

Bevorzugt stehen R¹⁰ für 1,3-Propylen oder 1,4-Butylen oder 3,3-Dimethyl-1,4-butylen und X für NR¹², wobei R¹² bevorzugt für einen Rest der Formel 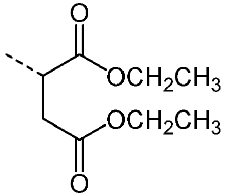 steht.

Weiterhin bevorzugt stehen X für O und R¹⁰ für einen Rest der Formel 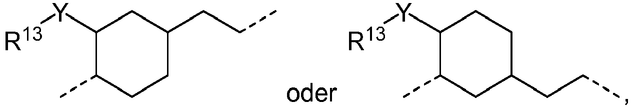 wobei dieser Rest so steht, dass X direkt an den Cyclohexylring gebunden ist, und wobei Y für O oder für NR¹⁴ steht, und R¹³ und R¹⁴ unabhängig voneinander jeweils für einen einwertigen Kohlenwasserstoffrest mit 1 bis 18 C-Atomen, welcher Heteroatome in Form von Ether-Sauerstoff oder Thioether-Schwefel oder tertiärem AminStickstoff enthalten kann, stehen, oder zusammen mit Y (bzw. N) einen Ring bilden, insbesondere einen Morpholin-Ring.

Die beschriebene Zusammensetzung enthält weiterhin mindestens ein silanfunktionelles Polymer P2 mit Endgruppen der Formel (I).

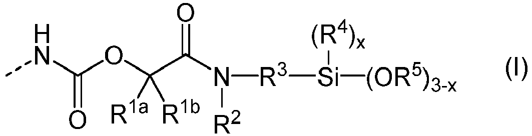

Das silanfunktionelle Polymer P2 ist bevorzugt bei Raumtemperatur flüssig.

Das silanfunktionelle Polymer P2 ist bevorzugt ein Silangruppen-haltiger Polyether und/oder Polyester und/oder Polycarbonat.
Besonders bevorzugt ist es ein Silangruppen-haltiger Polyether. Dieser weist bevorzugt mehrheitlich Oxyalkylen-Einheiten, insbesondere 1,2-Oxypropylen-Einheiten, auf.
Seine Endgruppen der Formel (I) sind mehrheitlich an cycloaliphatische oder aromatische Reste gebunden, insbesondere an cycloaliphatische Reste abgeleitet von Isophorondiisocyanat. Mit an cycloaliphatische Reste gebundenen Endgruppen der Formel (I) ist es besonders lichtstabil.
Das silanfunktionelle Polymer P2 ist bevorzugt frei von Isocyanatgruppen. Das silanfunktionelle Polymer P2 enthält bevorzugt neben Endgruppen der Formel (I) keine weiteren Silan-Endgruppen.

Das silanfunktionelle Polymer P2 weist im Mittel bevorzugt 1.3 bis 4, insbesondere 1.5 bis 3, besonders bevorzugt 1.7 bis 2.8, Endgruppen der Formel (I) pro Molekül auf.

Bevorzugt weist das Polymer P2 ein mittleres Molekulargewicht im Bereich von 1'000 bis 30'000 g/mol, bevorzugt 2'000 bis 25'000 g/mol, besonders bevorzugt 3'000 bis 20'000 g/mol, auf.

R^{1a} steht bevorzugt für ein Wasserstoffatom oder für einen Methyl-Rest, insbesondere für einen Methyl-Rest.
R^{1b} steht bevorzugt für ein Wasserstoffatom oder einen Methyl-Rest, insbesondere für ein Wasserstoffatom.
Besonders bevorzugt stehen R^{1a} für einen Methyl-Rest und R^{1b} für ein Wasserstoffatom. Ein solches Polymer P2 ist besonders gut zugänglich, besonders gut herstellbar und weist besonders gute mechanische Eigenschaften auf.
R² steht bevorzugt für ein Wasserstoffatom.
R³ steht bevorzugt für einen linearen oder verzweigten Alkylen-Rest mit 1 bis 6 C-Atomen.
Besonders bevorzugt ist der Rest R³ ausgewählt aus der Gruppe bestehend aus Methylen, 1,3-Propylen, 2-Methyl-1,3-propylen, 1,4-Butylen, 3-Methyl-1,4-butylen und 3,3-Dimethyl-1,4-butylen. Davon bevorzugt sind 1,3-Propylen oder 3,3-Dimethyl-1,4-butylen, insbesondere 1,3-Propylen.
Die Stellung der Substituenten in den Resten R³ ist ausgehend vom Silicium-atom nummeriert.
R⁴ steht bevorzugt für einen Methyl-Rest.
R⁵ steht bevorzugt für einen Methyl-Rest oder für einen Ethyl-Rest.
x steht bevorzugt für 0 oder 1, insbesondere für 0. Ein solches Polymer weist besonders reaktive Silangruppen auf.

Am meisten bevorzugt stehen R^{1a} für einen Methyl-Rest, R^{1b} für ein Wasserstoffatom, R² für ein Wasserstoffatom, R³ für einen Rest ausgewählt aus der Gruppe bestehend aus 1,3-Propylen, 2-Methyl-1,3-propylen, 1,4-Butylen, 3-Methyl-1,4-butylen und 3,3-Dimethyl-1,4-butylen, R⁵ für einen Methyl-Rest oder für einen Ethyl-Rest, und x für 0.

Das silanfunktionelle Polymer P2 mit Endgruppen der Formel (I) wird bevorzugt erhalten aus der Umsetzung von Isocyanatgruppen-haltigen Polymeren, insbesondere NCO-terminierten Urethan-Polyethern und/oder -Polyestern und/oder - Polycarbonaten, aus der Umsetzung von Polyolen mit einer überstöchiometrischen Menge an Polyisocyanaten, mit mindestens einem Hydroxysilan der Formel (III), 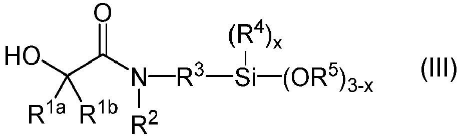 wobei R^{1a}, R^{1b}, R², R³, R⁴, R⁵ und x die bereits genannten Bedeutungen aufweisen.
Ein besonders bevorzugtes Hydroxysilan der Formel (III) ist N-(3-Triethoxysilyl-propyl)-2-hydroxypropanamid oder N-(3-Trimethoxysilylpropyl)-2-hydroxypro-panamid.
Bevorzugt wird dabei das Hydroxysilan der Formel (III) gegenüber den Isocyanatgruppen des NCO-terminierten Urethan-Polyethers stöchiometrisch oder leicht überstöchiometrisch eingesetzt, insbesondere in einem Verhältnis im Bereich von 1.0 bis 1.2.

Das Hydroxysilan der Formel (III) wird bevorzugt erhalten aus der Umsetzung von mindestens einem Aminosilan der Formel (IV) mit mindestens einem Lactid der Formel (V), 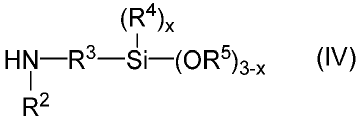 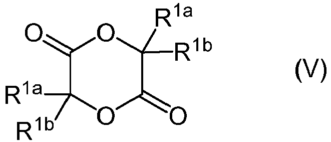 wobei R^{1a}, R^{1b}, R², R³, R⁴, R⁵ und x die bereits genannten Bedeutungen aufweisen.
Diese Umsetzung wird bevorzugt unter Feuchtigkeitsausschluss bei einer Temperatur im Bereich von 15 bis 120 °C, insbesondere 20 bis 90 °C, durchgeführt, gegebenenfalls in Anwesenheit eines Katalysators und/oder eines Trocknungsmittels wie insbesondere Vinyltriethoxysilan, Tetraethoxysilan, Vinyltrimethoxysilan oder einem Molekularsieb. Es werden bevorzugt ungefähr zwei Mol Aminosilan pro Mol Lactid eingesetzt. Insbesondere wird mit einem Aminosilan/Lactid-Verhältnis im Bereich von 1.8 bis 2.2 gearbeitet. Die Umsetzung kann lösemittelfrei oder in einem geeigneten Lösemittel erfolgen. Nach der Umsetzung können allfällig vorhandene flüchtige Verbindungen, insbesondere Lösemittel, unreagierte Edukte oder freigesetzter Alkohol, destillativ aus dem Reaktionsprodukt entfernt werden.

Ein geeigneter NCO-terminierter Urethan-Polyether und/oder -Polyester und/oder -Polycarbonat wird insbesondere erhalten aus der Umsetzung von Polyolen mit einer überstöchiometischen Menge an Polyisocyanaten, insbesondere Diisocyanaten. Die Umsetzung wird bevorzugt unter Feuchtigkeitsausschluss bei einer Temperatur von 50 °C bis 160 °C durchgeführt, gegebenenfalls in Anwesenheit geeigneter Katalysatoren, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Urethan-Polyether nach der Umsetzung aller Hydroxylgruppen ein Gehalt an freien Isocyanatgruppen von 0.1 bis 5 Gewichts-%, bevorzugt 0.2 bis 4 Gewichts-%, besonders bevorzugt 0.3 bis 3 Gewichts-%, bezogen auf das gesamte Polymer, verbleibt. Gegebenenfalls kann der Urethan-Polymer unter Mitverwendung von Weichmachern hergestellt werden, wobei die verwendeten Weichmacher keine gegenüber Isocyanaten reaktive Gruppen enthalten. Bevorzugte Polyisocyanate sind Diisocyanate, insbesondere Diisocyanate ausgewählt aus der Gruppe bestehend aus 1,6-Hexamethylendiisocyanat (HDI), 1-Isocyanato-3,3,5-trimethyl-5-isocyanatomethyl-cyclohexan (=Isophorondiisocyanat oder IPDI), 2,4- und 2,6-Toluylendiisocyanat und beliebige Gemische dieser Isomeren (TDI) und 4,4'-, 2,4'- und 2,2'-Diphenylmethandiisocyanat und beliebige Gemische dieser Isomeren (MDI). Besonders bevorzugt sind IPDI oder TDI. Meist bevorzugt ist IPDI. Damit werden silanfunktionelle Polymere mit besonders guter Lichtechtheit erhalten.

### Bevorzugte Polyole sind

- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, wobei diese mit Hilfe eines Startermoleküls mit zwei oder mehreren aktiven Wasserstoffatomen polymerisiert sein können, insbesondere einem Startermolekül wie Wasser, Ammoniak oder einer Verbindung mit mehreren OH- oder NH-Gruppen wie beispielsweise 1,2-Ethandiol, 1,2- oder 1,3-Propandiol, Neopentylglykol, Diethylenglykol, Triethylenglykol, die isomeren Dipropylenglykole oder Tripropylenglykole, die isomeren Butandiole, Pentandiole, Hexandiole, Heptandiole, Octandiole, Nonandiole, Decandiole, Undecandiole, 1,3- oder 1,4-Cyclohexandimethanol, Bisphenol A, hydriertes Bisphenol A, 1,1,1-Trimethylolethan, 1,1,1-Trimethylolpropan, Glycerin oder Anilin, oder Mischungen der vorgenannten Verbindungen. Ebenfalls geeignet sind Polyetherpolyole mit darin dispergierten Polymerpartikeln, insbesondere solche mit Styrol-Acrylnitril-Partikeln (SAN) oder Acrylnitril-Methylmethacrylat-Partikeln.
- Polyesterpolyole, insbesondere aus der Polykondensation von Hydroxycarbonsäuren oder insbesondere solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin oder 1,1,1-Trimethylolpropan, oder Mischungen der vorgenannten Alkohole, mit organischen Di- oder Tricarbonsäuren, insbesondere Dicarbonsäuren, oder deren Anhydride oder Ester, wie insbesondere Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure oder Trimellithsäureanhydrid, oder Mischungen der vorgenannten Säuren, sowie Polyesterpolyole aus Lactonen wie insbesondere ε-Caprolacton und Startern wie den vorgenannten zwei- oder dreiwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.

Besonders bevorzugte Polyole sind Polyetherpolyole, insbesondere Polyoxypropylendiole und/oder Polyoxypropylentriole, oder sogenannte Ethylenoxidterminierte (EO-endcapped) Polyoxypropylendiole oder -triole. Letztere sind Polyoxyethylen-polyoxypropylen-Mischpolyole, die insbesondere dadurch erhalten werden, dass Polyoxypropylendiole oder Polyoxypropylentriole nach Abschluss der Polypropoxylierungsreaktion mit Ethylenoxid weiter alkoxyliert werden und dadurch schliesslich primäre Hydroxylgruppen aufweisen. Bevorzugte Polyetherpolyole weisen einen Ungesättigtheitsgrad von weniger als 0.02 mEq/g, insbesondere weniger als 0.01 mEq/g auf.
Bevorzugte Polyetherpolyole weisen ein mittleres Molekulargewicht im Bereich von 500 bis 30'000 g/mol, bevorzugt 1'000 bis 20'000 g/mol, insbesondere 2'000 bis 15'000 g/mol, auf.
Zur Herstellung eines geeigneten NCO-terminierten Urethan-Polyethers können neben Polyetherpolyolen anteilig auch andere Polyole eingesetzt werden, insbesondere Polyacrylatpolyole oder niedrigmolekulare Diole oder Triole.

Das silanfunktionelle Polymer P2 mit Endgruppen der Formel (I) weist vorteilhafte Eigenschaften auf. Es ist von moderater Viskosität, sehr lagerstabil und härtet mit Feuchtigkeit bei Raumtemperatur schnell zu einem elastischen, nichtklebrigen Material mit hoher Festigkeit, hoher Dehnbarkeit und sehr guter Wärmebeständigkeit aus.

Das silanfunktionlle Polymer P1 und das silanfunktionelle Polymer P2 mit Endgruppen der Formel (I) werden typischerweise getrennt voneinander hergestellt. Anschliessend werden die beiden Polymere und gegebenenfalls weitere Bestandteile mit einer geeigneten Methode vermischt, wobei eine erfindungsgemässe Zusammensetzung entsteht.

In einer Ausführungsform der Erfindung wird das Polymer P2 mit Endgruppen der Formel (I) in Anwesenheit eines bereits vorgängig hergestellten silanfunktionellen Polymers P1 hergestellt. Dabei kann insbesondere so vorgegangen werden, dass (i) das silanfunktionelle Polymer P1 vorgelegt wird, (ii) das Aminosilan der Formel (IV) und das Lactid der Formel (V) ins Polymer P1 eingemischt und wie vorgängig beschrieben zur Reaktion gebracht werden, wobei ein Hydroxysilan der Formel (III) entsteht, und schliesslich (iii) ein NCO-terminierter Urethan-Polyether in die Reaktionsmischung eingemischt und mit dem Hydroxysilan wie beschrieben umgesetzt wird, wobei eine erfindungsgemässe Zusammensetzung entsteht.

In der Zusammensetzung liegen das Polymer P1 und das Polymer P2 in einer solchen Menge vor, dass das Gewichtsverhältnis zwischen den silanfunktionellen Polymeren P1 und P2 im Bereich von 99:1 bis 10:90 liegt.
Bevorzugt liegt das Gewichtsverhältnis zwischen den silanfunktionellen Polymeren P1 und P2 im Bereich von 98:2 bis 20:80, insbesondere 95:5 bis 25:75, besonders bevorzugt 90:10 bis 30:70. Eine solche Zusammensetzung weist eine optimale Kombination aus tiefer Viskosität und schneller Aushärtung auf.

Sowohl das silanfunktionelle Polymere P1 als auch das silanfunktionelle Polymer P2 weisen Silangruppen auf. Beide Polymere sind unter Ausschluss von Feuchtigkeit lagerstabil. Bei Kontakt mit Feuchtigkeit hydrolysieren die Silangruppen. Dabei bilden sich Silanolgruppen (Si-OH-Gruppen) und durch nachfolgende Kondensationsreaktionen Siloxangruppen (Si-O-Si-Gruppen). Als Ergebnis dieser Reaktionen härtet die Zusammensetzung zu einem vernetzten Kunststoff aus. Das Wasser für die Aushärtung kann entweder aus der Luft stammen (Luftfeuchtigkeit), oder die Zusammensetzung kann mit einer Wasser enthaltenden Komponente in Kontakt gebracht werden, zum Beispiel durch Bestreichen, Besprühen oder Einmischen.
Bevorzugt enthalten die beiden silanfunktionellen Polymere Silangruppen mit gleichen Alkoxy-Resten. Dadurch wird bei der Aushärtung der Zusammensetzung nur eine Art von Alkohol freigesetzt. Eine solche Zusammensetzung ist besonders gut lagerstabil. Bei Zusammensetzungen mit Silangruppen unterschiedlicher Alkoxy-Reste besteht während der Lagerung die Möglichkeit, dass die Silangruppen durch Umesterung Alkoxy-Reste untereinander austauschen, wodurch sich die Aushärtungsgeschwindigkeit der Zusammensetzung wesentlich verändern kann, was unerwünscht ist.
Bevorzugt enthalten in der Zusammensetzung das silanfunktionelle Polymer P1 und das silanfunktionelle Polymer P2 beide entweder ausschliesslich Methoxysilangruppen oder ausschliesslich Ethoxysilangruppen.
Dabei weisen Zusammensetzungen mit ausschliesslich Methoxysilangruppen den Vorteil auf, mit Feuchtigkeit besonders schnell zu vernetzen. Zusammensetzungen mit ausschliesslich Ethoxysilangruppen weisen den Vorteil auf, besonders lagerstabil zu sein und bei der Aushärtung das wenig toxische Ethanol freizusetzen.

Die Zusammensetzung enthält neben dem silanfunktionellen Polymer P1 und dem silanfunktionellen Polymer P2 bevorzugt mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln. Eine solche Zusammensetzung kann insbesondere als elastischer Klebstoff oder Dichtstoff oder elastische Beschichtung verwendet werden.

Bevorzugt weist eine solche Zusammensetzung einen Gehalt an silanfunktionellen Polymeren im Bereich von 5 bis 95 Gewichts-%, insbesondere im Bereich von 20 bis 80 Gewichts-%, auf.

Bevorzugt enthält die Zusammensetzung mindestens einen Katalysator, der die Vernetzung von silanfunktionellen Polymeren beschleunigt. Dafür geeignet sind insbesondere Metallkatalysatoren und/oder stickstoffhaltige Verbindungen.
Geeignete Metallkatalysatoren sind insbesondere Verbindungen von Titan, Zirkonium, Aluminium oder Zinn, insbesondere Organozinn-Verbindungen, Organotitanate, Organozirkonate oder Organoaluminate, wobei diese Verbindungen insbesondere Alkoxygruppen, Aminoalkoxygruppen, Sulfonatgruppen, Carboxylgruppen, 1,3-Diketonatgruppen, 1,3-Ketoesteratgruppen, Dialkylphosphatgruppen oder Dialkylpyrophosphatgruppen aufweisen.
Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat oder Dioctylzinndiacetylacetonat, oder Alkylzinnthioester.
Besonders geeignete Organotitanate sind:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy oder 2-Ethylhexoxy geeignet sind.
Ganz besonders geeignet sind Bis(ethylacetoacetato)diisobutoxy-titan(IV), Bis-(ethylacetoacetato)diisopropoxy-titan(IV), Bis(acetylacetonato)diisopropoxy-titan(IV), Bis(acetylacetonato)diisobutoxy-titan(IV), Tris(oxyethyl)aminisopropoxy-titan(IV), Bis[tris(oxyethyl)amin]diisopropoxy-titan(IV), Bis(2-ethylhexan-1,3-dioxy)-titan(IV), Tris[2-((2-aminoethyl)annino)ethoxy]ethoxy-titan(IV), Bis(neopentyl(diallyl)oxy-diethoxy-titan(IV), Titan(IV)tetrabutanolat, Tetra(2-ethylhexyloxy)titanat, Tetra(isopropoxy)titanat oder Polybutyltitanat. Insbesondere geeignet sind die kommerziell erhältlichen Typen Tyzor® AA, GBA, GBO, AA-75, AA-65, AA-105, DC, BEAT, BTP, TE, TnBT, KTM, TOT, TPT oder IBAY (alle von Dorf Ketal); Tytan PBT, TET, X85, TAA, ET, S2, S4 oder S6 (alle von Borica Company Ltd.) und Ken-React® KR® TTS, 7, 9QS, 12, 26S, 33DS, 38S, 39DS, 44, 134S, 138S, 133DS, 158FS oder LICA® 44 (alle von Kenrich Petrochemicals).
Besonders geeignete Organozirkonate sind die kommerziell erhältlichen Typen Ken-React® NZ® 38J, KZ® TPPJ, KZ® TPP, NZ® 01, 09, 12 38, 44 oder 97 (alle von Kenrich Petrochemicals) oder Snapcure® 3020, 3030, 1020 (alle von Johnson Matthey & Brandenberger).
Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alky-lendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxyanstelle der Methoxygruppen am Silicium; cyclische Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert-Butyl-1,1,3,3-tetramethylguanidin oder Umsetzungsprodukte aus Carbodiimiden und Aminen wie insbesondere Polyetheraminen oder Aminosilanen; oder Imidazole wie insbesondere N-(3-Trimethoxysilylpropyl)-4,5-dihydroimidazol oder N-(3-Triethoxysilylpropyl)-4,5-dihydroimidazol.
Geeignet sind auch Kombinationen verschiedener Katalysatoren, insbesondere Kombinationen aus mindestens einem Metallkatalysator und mindestens einer stickstoffhaltigen Verbindung.
Als Katalysator bevorzugt sind Organozinn-Verbindungen, Organotitanate, Amine, Amidine, Guanidine oder Imidazole.
Besonders bevorzugt sind Organotitanate oder Guanidine.

Geeignet sind weiterhin insbesondere die folgenden Hilfs- und Zusatzmittel:
- Anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Gimmer, Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln.
- Haftvermittler und/oder Vernetzer, insbesondere Silane wie insbesondere Aminosilane, wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin oder deren Analoga mit Ethoxy- oder Isopropoxy- anstelle der Methoxygruppen am Silicium, N-Phenyl-, N-Cyclohexyl- oder N-Alkylaminosilane, weiterhin Mercaptosilane, Epoxysilane, (Meth)acrylosilane, Anhydridosilane, Carbamatosilane, Alkylsilane oder Iminosilane, oder oligomere Formen dieser Silane, oder Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan oder die entsprechenden Silane mit Ethoxygruppen anstelle der Methoxygruppen, oder oligomere Formen dieser Silane.
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- oder Sulfonsäureester, Polybutene oder von natürlichen Fetten oder Ölen abgeleitete Fettsäuremethyl- oder -ethylester, auch "Biodiesel" genannt.
- Lösemittel.
- Trocknungsmittel, insbesondere Tetraethoxysilan, Vinyltrimethoxy- oder Vinyltriethoxysilan oder Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, oder Calciumoxid oder Molekularsiebe.
- Stabilisatoren gegen Oxidation, Wärme, Licht oder UV-Strahlung.
- Pigmente, insbesondere Titandioxid oder Eisenoxide.
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether oder hydrophob modifizierte Polyoxyethylene.
- Fasern, insbesondere Glasfasern, Kohlefasern, Metallfasern, Keramikfasern oder Kunststofffasern wie Polyamidfasern oder Polyethylenfasern.
- Farbstoffe.
- natürliche Harze, Fette oder Öle wie Kolophonium, Schellack, Leinöl, Rizinusöl oder Sojaöl.
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat oder Alkyl(meth)acrylate, insbesondere Polyethylene (PE), Polypropylene (PP), Polyisobutylene, Ethylenvinylacetat-Copolymere (EVA) oder ataktische Poly-α-Olefine (APAO).
- flammhemmende Substanzen, insbesondere die bereits genannten Füllstoffe Aluminiumhydroxid oder Magnesiumhydroxid, oder insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- oder Tris(isopropylphenyl)phosphate unterschiedlichen Isopropylierungsgrades, Resorcinol-bis(diphenylphosphat), Bisphenol-A-bis(diphenylphosphat) oder Ammoniumpolyphosphate.
- oberflächenaktive Substanzen, insbesondere Netzmittel, Verlaufsmittel, Entlüftungsmittel oder Entschäumer.
- Biozide, insbesondere Algizide, Fungizide oder das Pilzwachstum hemmende Substanzen.
oder weitere üblicherweise in feuchtigkeitshärtenden Zusammensetzungen eingesetzte Substanzen.
Es kann sinnvoll sein, gewisse Bestandteile vor dem Einmischen in die Zusammensetzung chemisch oder physikalisch zu trocknen.

In einer bevorzugten Ausführungsform ist die Zusammensetzung frei von Schwermetall-haltigen organischen Verbindungen. Insbesondere ist sie frei von Organozinn-Verbindungen.
In einer weiteren bevorzugten Ausführungsform ist die Zusammensetzung frei von cyclischen Amidinen, insbesondere frei von 1,8-Diazabicyclo[5.4.0]undec-7-en (DBU).

Die Zusammensetzung wird vorzugsweise unter Ausschluss von Feuchtigkeit hergestellt und aufbewahrt. Typischerweise ist die Zusammensetzung in einer geeigneten Verpackung oder Anordung, wie insbesondere einem Fass, einem Beutel oder einer Kartusche, unter Ausschluss von Feuchtigkeit lagerstabil.

Die Zusammensetzung kann in Form einer einkomponentigen oder in Form einer zweikomponentigen Zusammensetzung vorliegen.
Als "einkomponentig" wird im vorliegenden Dokument eine Zusammensetzung bezeichnet, bei welcher alle Bestandteile der Zusammensetzung vermischt im gleichen Gebinde gelagert werden und welche mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der Zusammensetzung auf mindestens einen Festkörper oder Artikel kommen die vorhandenen Silangruppen und gegebenenfalls vorhandene weitere feuchtigkeitsreaktive Gruppen in Kontakt mit Feuchtigkeit, wodurch die Zusammensetzung aushärtet. Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt ein Mass für die Aushärtungsgeschwindigkeit dar.

Ein weiterer Gegenstand der Erfindung ist somit eine ausgehärtete Zusammensetzung, erhalten aus einer Zusammensetzung wie beschrieben nach deren Reaktion mit Feuchtigkeit.

Die Zusammensetzung verfügt im ausgehärteten Zustand über ausgeprägt elastische Eigenschaften, insbesondere eine hohe Festigkeit und eine hohe Dehnbarkeit, sowie über eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Schweiss- oder Bördelnahtdichtstoff, Parkettklebstoff, Montageklebstoff, Karrosserieklebstoff, Scheibenklebstoff, Sandwichelementklebstoff, Bodenbelag, Bodenbeschichtung, Balkonbeschichtung, Dachbeschichtung, Betonschutzbeschichtung, Parkhausbeschichtung oder als Schutzanstrich gegen Korrosion, als Versiegelung, Anstrich, Lack oder Primer. Besonders geeignet ist die Zusammensetzung als Klebstoff oder Dichtstoff oder Beschichtung, insbesondere für die Fugenabdichtung oder für elastische Klebeverbindungen in Bau- oder Industrieanwendungen.

Ein weiterer Gegenstand der Erfindung ist die Verwendung der beschriebenen Zusammensetzung als Klebstoff oder Dichtstoff oder als Beschichtung.

Für die Anwendung als Klebstoff oder Dichtstoff weist die Zusammensetzung bevorzugt eine pastöse Konsistenz mit strukturviskosen Eigenschaften auf. Ein solcher pastöser Klebstoff oder Dichtstoff wird insbesondere aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikationsroboters, auf ein Substrat aufgetragen.
Verklebt oder abgedichtet werden können zwei gleichartige oder zwei verschiedene Substrate.
Geeignete Substrate sind insbesondere
- Glas, Glaskeramik, Siebdruckkeramik, Beton, Mörtel, Backstein, Ziegel, Gips oder Natursteine wie Granit oder Marmor;
- Metalle oder Legierungen, wie Aluminium, Eisen, Stahl oder Buntmetalle, oder oberflächenveredelte Metalle oder Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke, insbesondere Automobildecklacke.
Die Substrate können bei Bedarf vor dem Applizieren des Klebstoffs oder Dichtstoffs vorbehandelt werden, insbesondere durch physikalische und/oder chemische Reinigungsverfahren oder das Aufbringen eines Haftvermittlers, einer Haftvermittlerlösung oder eines Primers.
Nach dem Verkleben oder Abdichten von zwei Substraten wird ein verklebter oder abgedichteter Artikel erhalten. Ein derartiger Artikel kann ein Bauwerk sein, insbesondere ein Bauwerk des Hoch- oder Tiefbaus, oder ein industrielles Gut oder ein Konsumgut sein, insbesondere ein Fenster, eine Haushaltmaschine oder ein Transportmittel wie insbesondere ein Automobil, ein Bus, ein Lastkraftwagen, ein Schienenfahrzeug, ein Schiff, ein Flugzeug oder ein Helikopter, ein Anbauteil davon sein.

Die Erfindung betrifft weiterhin eine Methode zur Beschleunigung der Aushärtung einer feuchtigkeitshärtenden Zusammensetzung enthaltend mindestens ein silanfunktionelles Polymer P1, indem der Zusammensetzung mindestens ein silanfunktionelles Polymer P2 mit Endgruppen der Formel (I) zugesetzt wird, wobei das silanfunktionelle Polymer P1 keine Endgruppen der Formel (I) aufweist.
Dabei sind die vorgängig beschriebenen silanfunktionellen Polymere P1 und P2, insbesondere ihre bevorzugten Ausführungsformen, geeignet. Mit dieser Methode ist es möglich, niedrigviskose, aber reaktionsträge silanfunktionelle Polymere, beispielsweise kommerziell erhältliche Typen der Handelsnamen MS Polymer™, TEGOPAC® oder SPUR⁺, ohne den Einsatz von Organozinn-Verbindungen oder starken Basen wie DBU in der Aushärtung stark zu beschleunigen und zugleich deren Festigkeit und Elastizität zu erhöhen. Damit sind feuchtigkeitshärtende Zusammensetzungen mit überraschend schneller Hautbildungszeit und tiefer Viskosität erhältlich, was die bereits erwähnten Vorteile bringt. Bereits bei geringen Zugabemengen an Polymer P2 werden Zusammensetzungen mit nahezu gleich schneller Hautbildungszeit wie mit dem Polymer P2 allein erhalten.
Bevorzugt wird das silanfunktionelle Polymer P2 in einer solchen Menge zugesetzt, dass das Gewichtsverhältnis zwischen den silanfunktionellen Polymeren P1 und P2 im Bereich von 99:1 bis 10:90, bevorzugt 95:5 bis 20:80, besonders bevorzugt 90:10 bis 30:70, insbesondere 80:20 bis 40:60, liegt.
Die feuchtigkeitshärtende Zusammensetzung enthält bevorzugt mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln, wie vorgängig beschrieben. Nach dem Zusetzen des silanfunktionellen Polymers P2 weist eine solche feuchtigkeitshärtende Zusammensetzung bevorzugt einen Gehalt an silanfunktionellen Polymeren im Bereich von 5 bis 95 Gewichts-%, insbesondere im Bereich von 20 bis 80 Gewichts-%, auf.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

### "TFT" steht für "Hautbindungszeit" (Tack Free Time)

**Viskositäten** wurden bestimmt auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei 20 °C.

Die in den Tabellen 1 bis 4 mit "(Ref.)" bezeichneten Zusammensetzungen sind Vergleichsbeispiele.

### 1. Verwendete Ausgangsmaterialen und Abkürzungen dafür:

- Acclaim® 12200: Polyoxypropylendiol mit niedrigem Ungesättigtheitsgrad, OH-Zahl 11.0 mg KOH/g, Wassergehalt ca. 0.02 Gew.-% (von Bayer)
- IPDI: Isophorondiisocyanat, Vestanat® IPDI (von Evonik Industries)
- TDI: 2,4-Toluylendiisocyanat, Desmodur® T-100 (von Bayer MaterialScience)
- DIDP: Diisodecylphthalat
- IBAY: Bis(ethylacetoacetato)diisobutoxy-titan(IV), Tyzor® IBAY (von Dorf Ketal)
- VTEO: Vinyltriethoxysilan
- VTMO: Vinyltrimethoxysilan
- PCC: gefälltes Calciumcarbonat, Socal® U1 S2 (von Solvay)
- GCC: gemahlenes Calciumcarbonat, Omyacarb® 5 GU (von Omya)
- DBU: 1,8-Diazabicyclo[5.4.0]undec-7-en

### Hvdroxvsilane:

### Hydroxysilan 1: N-(3-Triethoxysilylpropyl)-2-hydroxypropanamid

In einem Rundkolben wurden 20.00 g (90.4 mmol) 3-Aminopropyltriethoxysilan und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 2: N-(3-Trimethoxysilylpropyl)-2-hydroxypropanamid

In einem Rundkolben wurden 16.21 g (90.4 mmol) 3-Aminopropyltrimethoxysilan und 6.71 g (46.6 mmol) L-Lactid unter Stickstoffatmosphäre während 3 h bei 80 °C gerührt, bis mittels IR-Spektroskopie kein Reaktionsfortschritt mehr festgestellt wurde. Das Rohprodukt wurde während 15 min bei 60 °C und ca. 10 mbar nachbehandelt. Es wurde ein farbloses flüssiges Produkt erhalten.

### Hydroxysilan 3: 2-Morpholino-4(5)-(2-triethoxysilylethy-ol

In einem Rundkolben wurden 38.46 g (133.33 mmol) *β*-(3,4-Epoxycyclohexyl)-ethyltriethoxysilan (CoatOSil® 1770 von Momentive), 15.34 g (176.08 mmol) wasserfreies Morpholin und 0.10 g Lanthan(III)-triflat unter Stickstoffatmosphäre während 2h bei 110 °C gerührt, bis mittels Gaschromatographie kein Reaktionsfortschritt mehr festgestellt wurde. Das Rohprodukt wurde während 30 min bei 80°C und ca. 1 mbar nachbehandelt. Es wurde ein farbloses flüssiges Produkt erhalten.

### Hydroxysilan 4: 2-Ethoxy-4(5)-(2-triethoxysilylethyl)cyclohexan-1-ol

In einem Rundkolben wurden 150.00 g Ethanol und 0.50 g Vinyltriethoxysilan unter Stickstoffatmosphäre während 15 min bei 50 °C gerührt. Anschliessend wurden 180.00 g (624 mmol) *β*-(3,4-Epoxycyclohexyl)ethyltriethoxysilan (CoatOSil® 1770 von Momentive) und 3.06 g Aluminiumisopropoxid zugegeben und unter Stickstoffatmosphäre während 16 h bei 100 °C am Rückfluss gerührt. Dann wurde die trübe Reaktionsmischung auf Raumtemperatur abgekühlt, filtriert und überschüssiges Ethanol bei 80°C und 10 mbar am Rotationsverdampfer entfernt. Es wurde ein farbloses flüssiges Produkt erhalten.

### Hydroxysilan 5: 2-Methoxy-4(5)-(2-trimethoxysilylethyl)cyclohexan-1-ol

In einem Rundkolben wurden 104.35 g Methanol und 0.39 g Vinyltrimethoxysilan unter Stickstoffatmosphäre während 15 min bei 50 °C gerührt. Dann wurden 153.74 g (624 mmol) *β*-(3,4-Epoxycyclohexyl)ethyltrimethoxysilan (Silquest® A-186 von Momentive) und 3.06 g Aluminiumisopropoxid zugegeben und die trübe Mischung in Portionen à 60 g im Mikrowellenreaktor jeweils während 30 min bei 140°C und einem Druck von ca. 12 bar zur Reaktion gebracht. Anschliessend wurden die vereinigten trüben Reaktionsmischungen auf Raumtemperatur abgekühlt, filtriert und überschüssiges Methanol bei 80°C und 10 mbar am Rotationsverdampfer entfernt. Es wurde ein farbloses flüssiges Produkt erhalten.

### Hydroxysilan 6: Gemisch enthaltend 2-(2-Methoxyethoxy)ethoxy-4(5)-(2-tris(2-(2-methoxyethoxy)ethoxy)silylethyl)cyclohexan-1-ol, 2-(2-Methoxyethoxy)ethoxy-4(5)-(2-ethoxy-bis(2-(2-methoxyethoxy)ethoxy)silylethyl)cyclohexan-1-ol und 2-(2-Methoxyethoxy)ethoxy-4(5)-(2-diethoxy-(2-(2-methoxyethoxy)-ethoxy)silylethyl)cyclohexan-1-ol

In einem Rundkolben wurden 117.04 g Methyldiglykol, 50.00 g (203 mmol) *β-*(3,4-Epoxycyclohexyl)ethyltrimethoxysilan (Silquest® A-186 von Momentive) und 0.50 g Aluminiumisopropoxid unter Stickstoffatmosphäre während 1 h bei 120 °C und gerührt. Anschliessend wurde bei gleichbleibender Temperatur während 2 h bei 400 mbar, weiteren 2 h bei 300 mbar und weiteren 3 h bei 150 mbar über einen ungekühlten Destillationsaufsatz ein klares Destillat aufgefangen, welches im FT-IR als fast reines Methanol mit Spuren von Methyldiglykol identifiziert wurde. Die Reaktionsmischung wurde während 24 Stunden bei 140 °C und 50 mbar weitergerührt, bis kein Destillat mehr aufgefangen werden konnte. Schliesslich wurde das überschüssige Methyldiglykol bei 120°C und 0.5 mbar entfernt. Es wurde ein farbloses flüssiges Produkt erhalten.

### Isocyanatgruppen aufweisendes Polyurethanpolymer:

### NCO-Polymer 1:

Unter Feuchtigkeitsausschluss wurden 720.0 g Acclaim® 12200, 34.5 g IPDI, 80.0 g DIDP und 0.1 g Bismuttris(neodecanoat) (10 Gewichts-% in DIDP) unter stetigem Rühren auf 90 °C aufgeheizt und auf dieser Temperatur belassen, bis der titrimetrisch bestimmte Gehalt an freien Isocyanatgruppen einen stabilen Wert von 0.73 Gewichts-% erreicht hatte. Das Isocyanatgruppen aufweisende Polymer wurde auf Raumtemperatur abgekühlt und unter Ausschluss von Feuchtigkeit aufbewahrt. Es war klar und hatte am Folgetag der Herstellung eine Viskosität von 31 Pa·s(20 °C).

### Silanfunktionelle Polymere P1:

### Polymer P1-1:

Unter Feuchtigkeitsausschluss wurden 100.00 g NCO-Polymer 1, 0.06 g Bis-muttris(neodecanoat) (10 Gewichts-% in DIDP) und 7.19 g N-(3-Triethoxysilyl-propyl)asparaginsäurediethylester unter Stickstoffatmosphäre bei 80 °C gerührt, bis mittels IR-Spektroskopie keine Isocyanatgruppen mehr nachweisbar waren (ca. 1.5 h). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 83 Pa·s (20 °C).

**Polymer P1-2:** TEGOPAC® Bond 150 (von Evonik Industries) mit einer Viskosität von 78 Pa·s(20 °C).

### Polymer P1-3:

Unter Feuchtigkeitsausschluss wurden 250.00 g Acclaim® 12200 und 0.25 g Vinyltriethoxysilan während 30 min bei 80 °C gerührt und dann 0.25 g Bismuttris(neodecanoat) (10 Gewichts-% in DIDP) und 12.86 g Isocyanatopropyltriethoxysilan zugegeben und die Reaktionsmischung während 2 h bei 80 °C unter Vakuum gerührt. Anschliessend wurden 3.00 g Ethanol zugegeben und 15 min ohne Vakuum, dann weitere 15 min unter Vakuum, gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 10 Pa·s.

### Polymer P1-4:

Unter Feuchtigkeitsausschluss wurden 100.00 g NCO-Polymer 1, 0.06 g Bis-muttris(neodecanoat) (10 Gewichts-% in DIDP) und 7.54 g **Hydroxysilan 3** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 98 Pa·s (20 °C).

### Polymer P1-5:

Unter Feuchtigkeitsausschluss wurden 100.00 g NCO-Polymer 1, 0.06 g Bis-muttris(neodecanoat) (10 Gewichts-% in DIDP) und 6.72 g **Hydroxysilan 4** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 116 Pa·s (20 °C).

### Polymer P1-6:

Unter Feuchtigkeitsausschluss wurden 100.00 g NCO-Polymer 1, 0.06 g Bis-muttris(neodecanoat) (10 Gewichts-% in DIDP) und 12.66 g **Hydroxysilan 6** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 126 Pa·s(20 °C).

**Polymer P1-7:** TEGOPAC® Bond 250 (von Evonik Industries) mit einer Viskosität von 50 Pa·s(20 °C).

**Polymer P1-8:** TEGOPAC® Seal 100 (von Evonik Industries) mit einer Viskosität von 40 Pa·s(20 °C).

### Polymer P1-9:

Unter Feuchtigkeitsausschluss wurden 100.00 g NCO-Polymer 1, 0.06 g Bis-muttris(neodecanoat) (10 Gewichts-% in DIDP) und 6.42 g N-(3-Trimethoxy-silylpropyl)asparaginsäurediethylester unter Stickstoffatmosphäre bei 80 °C gerührt, bis mittels IR-Spektroskopie keine Isocyanatgruppen mehr nachweisbar waren (ca. 1.5 h). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 143 Pa·s (20 °C).

**Polymer P1-10:** MS Polymer™ S203H (von Kaneka) mit einer Viskosität von 11 Pa·s (20 °C).

**Polymer P1-11:** Silyl™ MAX602 (von Kaneka) mit einer Viskosität von 83 Pa·s (20 °C).

**Polymer P1-12:** MS Polymer™ XMAP SA100S (von Kaneka) mit einer Viskosität von 431 Pa·s (20 °C).

### Polymer P1-13:

Unter Feuchtigkeitsausschluss wurden 250.00 g Acclaim® 12200 und 0.25 g Vinyltrimethoxysilan während 30 min bei 80 °C gerührt und dann 0.25 g Bis-muttris(neodecanoat) (10 Gewichts-% in DIDP) und 10.67 g Isocyanatopropyl-trimethoxysilan zugegeben und die Reaktionsmischung während 2 h bei 80 °C unter Vakuum gerührt. Anschliessend wurden 2.10 g Methanol zugegeben und 15 min ohne Vakuum, dann weitere 15 min unter Vakuum, gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 11 Pa·s.

### Polymer P1-14:

Unter Feuchtigkeitsausschluss wurden 100.00 g NCO-Polymer 1, 0.06 g Bis-muttris(neodecanoat) (10 Gewichts-% in DIDP) und 5.58 g **Hydroxysilan 5** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 91 Pa·s (20 °C).

### Polymer P1-15:

Unter Feuchtigkeitsausschluss wurden 333.30 g NCO-Polymer 1, 0.25 g Coscat® 83 (Bi(III)-neodecanoat, von Vertellus) und 13.09 g N-(3-Triethoxysilylpropyl)formamid (hergestellt wie in WO 2015/113923 Beispiel 3 beschrieben) unter Stickstoffatmosphäre bei 80 °C gerührt, bis mittels IR-Spektroskopie keine Isocyanatgruppen mehr nachweisbar waren (ca. 3 h). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 203 Pa·s(20 °C).

### Polymer P1-16:

Polyvest® EP ST-E (von Evonik Industries), Triethoxysilan-terminiertes Polybutadien mit einer Viskosität von 11 Pa·s(20 °C).

### Silanfunktionelle Polymere P2 mit Endgruppen der Formel (I):

### Polymer P2-1:

Unter Feuchtigkeitsausschluss wurden 100.00 g NCO-Polymer 1, 0.06 g Bis-muttris(neodecanoat) (10 Gewichts-% in DIDP) und 5.88 g **Hydroxysilan 1** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 88 Pa·s(20 °C).

### Polymer P2-2:

Unter Feuchtigkeitsausschluss wurden 250.00 g Acclaim® 12200 und 0.25 g Vinyltriethoxysilan während 30 min bei 80°C unter Vakuum gerührt. Anschliessend wurden 0.25 g Bismuttris(neodecanoat) (10 Gewichts-% in DIDP) und 9.06 g TDI zugegeben und 1 h bei 80 °C ohne Vakuum, dann 1 h bei 80 °C unter Vakuum, gerührt. Anschliessend wurden 17.32 g **Hydroxysilan 1** zugegeben und 90 min bei 80 °C unter Vakuum gerührt, bis mittels IR-Spektroskopie keine Isocyanatgruppen mehr nachweisbar waren. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 85.2 Pa·s(20 °C).

### Polymer P2-3:

Unter Feuchtigkeitsausschluss wurden 100.00 g NCO-Polymer 1, 0.06 g Bis-muttris(neodecanoat) (10 Gewichts-% in DIDP) und 4.86 g **Hydroxysilan 2** unter Stickstoffatmosphäre bei 80 °C gerührt, bis mittels IR-Spektroskopie keine Isocyanatgruppen mehr nachweisbar waren (ca. 2 Stunden). Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 158 Pa·s(20 °C).

Herstellung eines silanfunktionellen Polymers P2 in einem silanfunktionellen

### Polymer P1:

### Polymer P12-1:

Unter Feuchtigkeitsausschluss wurden 146.20 g Polymer P1-2 (TEGOPAC® Bond 150, von Evonik Industries) vorgelegt und 5 min bei 100 °C unter Vakuum gerührt. Dann wurden 5.45 g (24.6 mmol) 3-Aminopropyltriethoxysilan und anschliessend 1.81 g (12.6 mmol) L-Lactid eingemischt und während 1 h bei 110 °C gerührt. Anschliessend wurden 140.00 g NCO-Polymer 1 und 0.30 g Bismuttris(neodecanoat) (10 Gewichts-% in DIDP) zugegeben und die Reaktionsmischung 1 h bei 100 °C unter Vakuum gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 93 Pa·s (20 °C).

### Polymer P12-2:

Unter Feuchtigkeitsausschluss wurden 146.20 g MS Polymer™ S303H (von Kaneka) vorgelegt und 5 min bei 100 °C unter Vakuum gerührt. Dann wurden 4.42 g (24.6 mmol) 3-Aminopropyltrimethoxysilan und anschliessend 1.81 g (12.6 mmol) L-Lactid eingemischt und während 1 h bei 100 °C gerührt. Anschliessend wurden 140.00 g NCO-Polymer 1 und 0.30 g Bismuttris(neodecanoat) (10 Gewichts-% in DIDP) zugegeben und die Reaktionsmischung 1 h bei 100 °C unter Vakuum gerührt. Im FT-IR wurde keine Isocyanatbande mehr festgestellt. Das silanfunktionelle Polymer wurde auf Raumtemperatur abgekühlt und unter Ausschluss von Feuchtigkeit aufbewahrt. Es war klar und hatte am Folgetag der Herstellung eine Viskosität von 62 Pa·s(20 °C).

### 2. feuchtigkeitshärtende Zusammensetzungen (ungefüllt) Zusammensetzungen Z1 bis Z28:

Für jede Zusammensetzung wurden die in der Tabelle 1 angegebenen Inhaltsstoffe in den angegebenen Mengen (in Gewichtsteilen) in einem Vakuummischer bei 50 °C unter Feuchtigkeitsausschluss während 30 min zu einer homogenen Paste verarbeitet und aufbewahrt. Jede Zusammensetzung wurde folgendermassen geprüft:
Die **Viskosität** wurde am Folgetag der Herstelltung bestimmt, mit einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei einer Temperatur von 20 °C.
Zur Bestimmung der **Hautbildungszeit** (TFT) wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

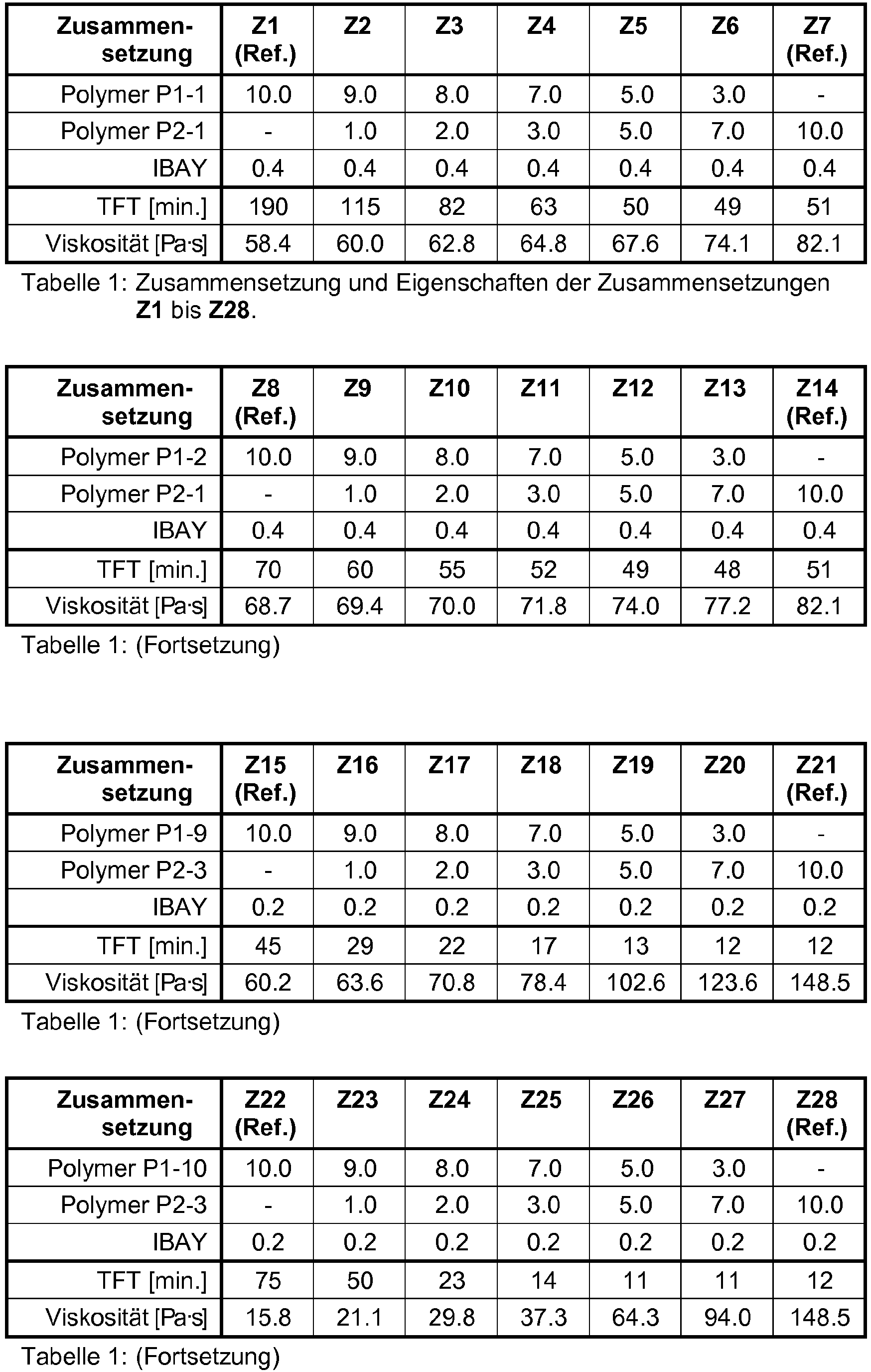

### 3. feuchtigkeitshärtende Zusammensetzungen (gefüllt) Zusammensetzungen Z29 bis Z73

Für jede Zusammensetzung wurden die in den Tabellen 2 bis 4 angegebenen Inhaltsstoffe in den angegebenen Mengen (in Gewichtsteilen) in einem Vakuummischer bei 50 °C unter Feuchtigkeitsausschluss während 30 min zu einer homogenen Paste verarbeitet und aufbewahrt. Jede Zusammensetzung wurde folgendermassen geprüft:
Die **Viskosität** und die **Hautbildungszeit** wurden wie für die Zusammensetzung **Z1** beschrieben geprüft.
Die **Shore A-Härte** wurde bestimmt nach DIN 53505 an während 14 Tagen im Normklima ausgehärteten Prüfkörpern.
Zur Bestimmung der mechanischen Eigenschaften wurde die Zusammensetzung auf einer PTFE-beschichteten Folie zu einem Film von 2 mm Dicke aufgebracht, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-5 % Dehnung) geprüft. Die Resultate sind in den Tabellen 2 bis 4 angegeben.

Die *Verdickerpaste* wurde hergestellt, indem in einem Vakuummischer 300 g Diisodecylphthalat und 48 g 4,4'-Methylendiphenyldiisocyanat (Desmodur® 44 MC L; von Bayer) vorgelegt, leicht aufgewärmt und anschliessend unter starkem Rühren 27 g Monobutylamin langsam zugetropft wurden. Die entstehende Paste wurde unter Vakuum und Kühlung eine Stunde weitergerührt.

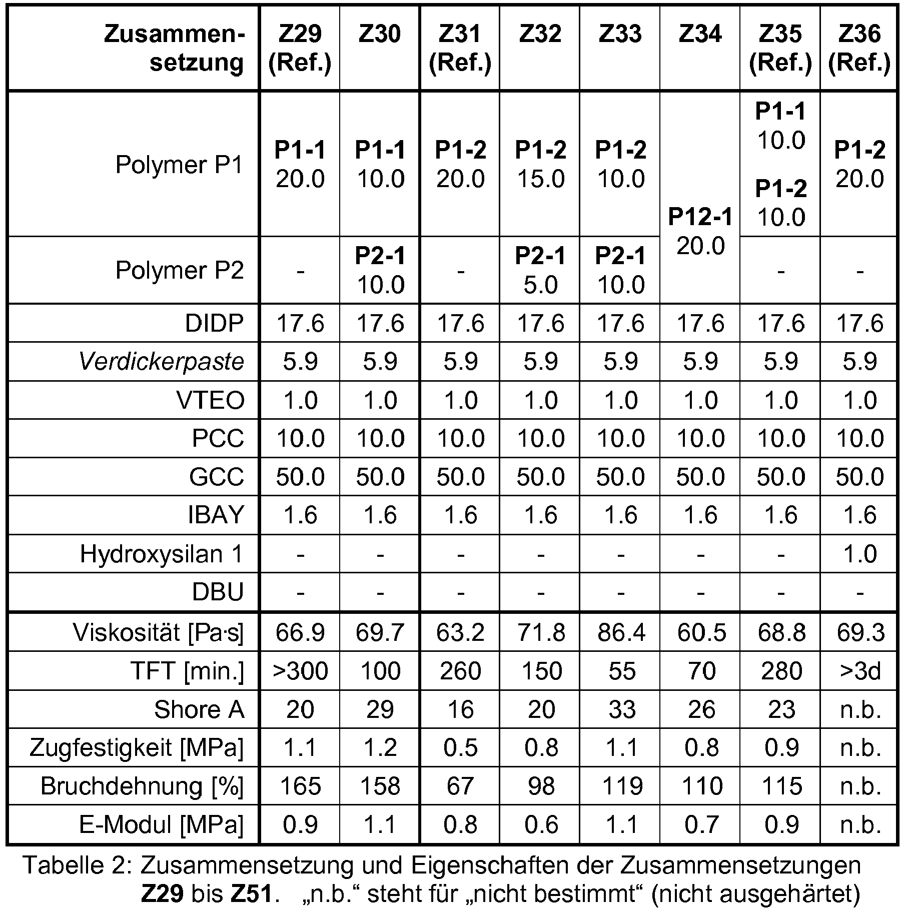

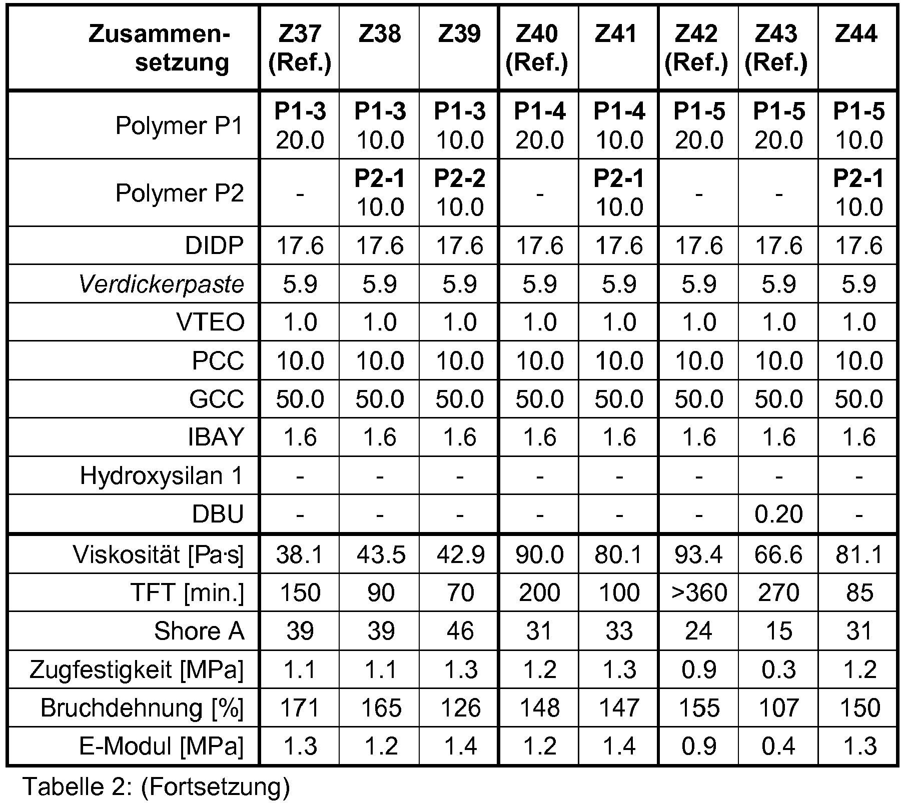

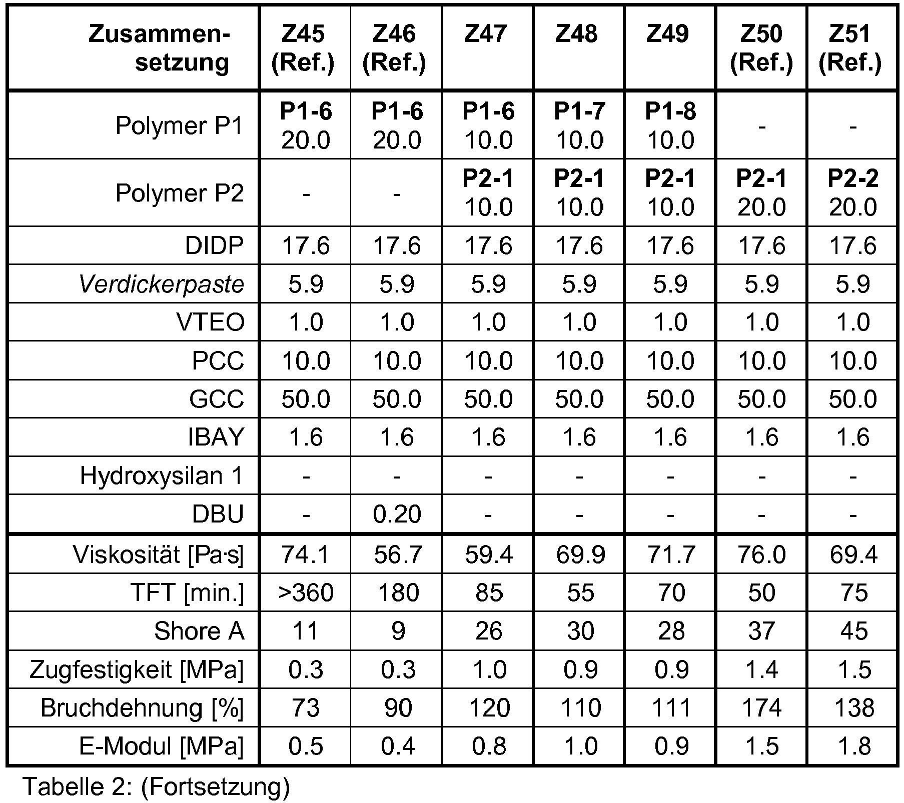

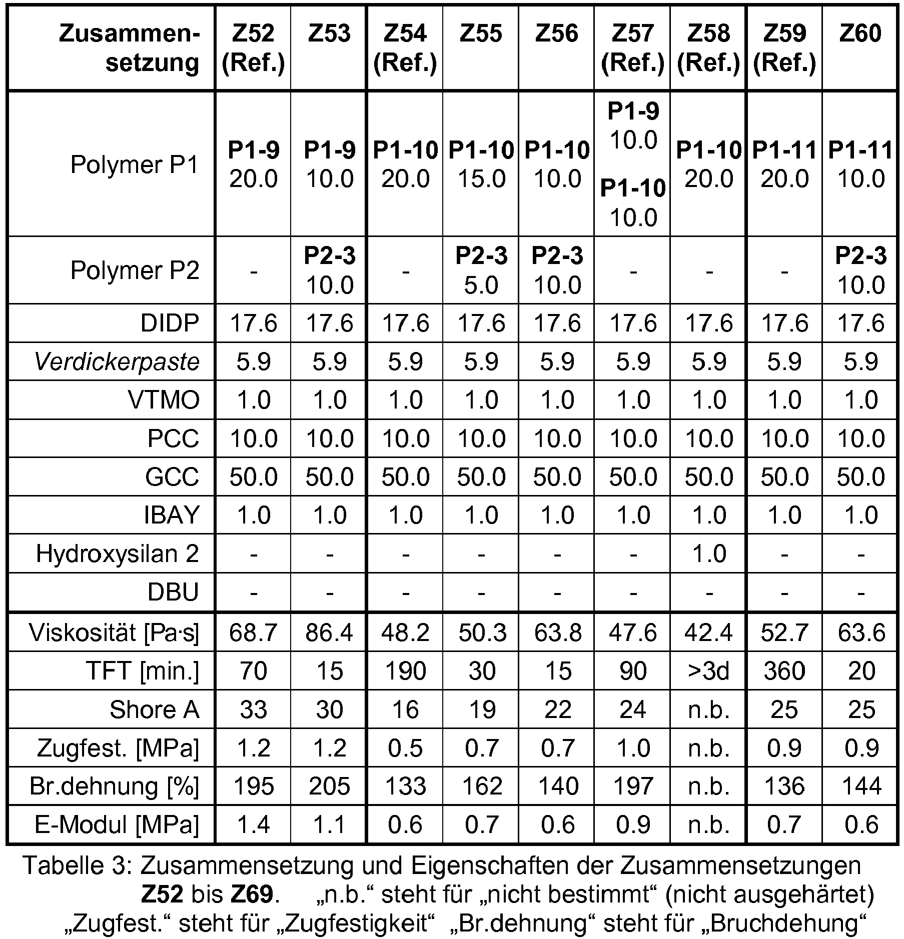

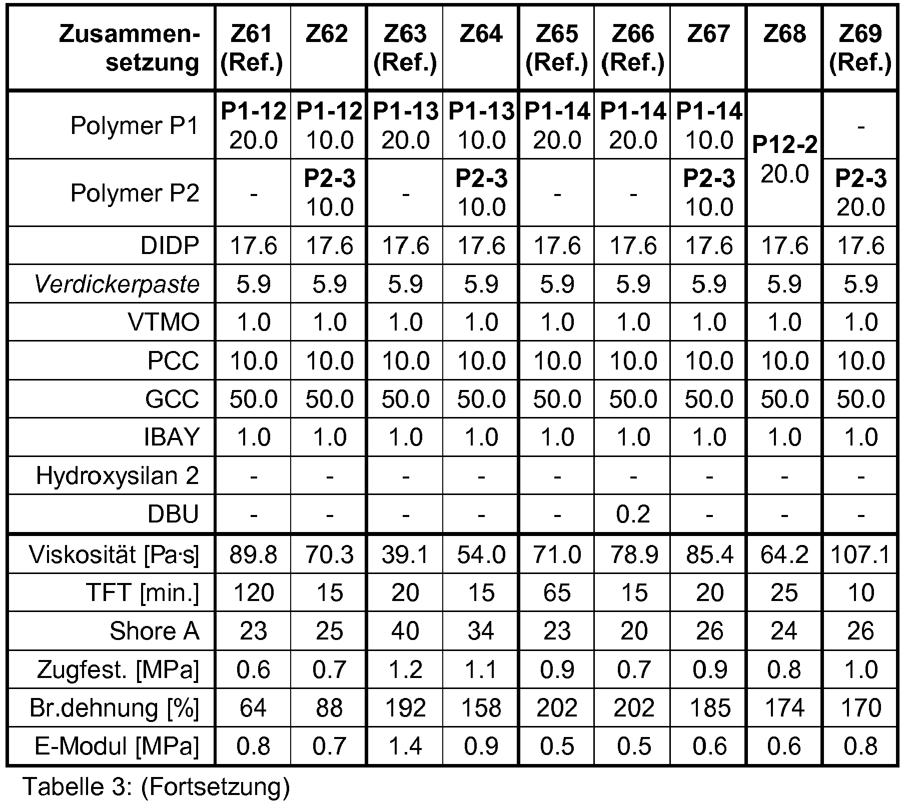

**Tabelle 4: Zusammensetzung und Eigenschaften der Zusammensetzungen Z70 bis Z73. ¹ nicht messbar (zu weich)**

| **Zusammensetzung** | **Z70 (Ref.)** | **Z71** | **Z72 (Ref.)** | **Z73** |
|---|---|---|---|---|
| Polymer P1 | **P1-15** | **P1-15** | **P1-17** | **P1-17** |
| | 20.0 | 10.0 | 20.0 | 10.0 |
| Polymer P2 | - | **P2-1** | - | **P2-1** |
| | | 10.0 | | 10.0 |
| DIDP | 17.6 | 17.6 | 17.6 | 17.6 |
| *Verdickerpaste* | 5.9 | 5.9 | 5.9 | 5.9 |
| VTEO | 1.0 | 1.0 | 1.0 | 1.0 |
| PCC | 10.0 | 10.0 | 10.0 | 10.0 |
| GCC | 50.0 | 50.0 | 50.0 | 50.0 |
| IBAY | 1.6 | 1.6 | 1.6 | 1.6 |
| Viskosität [Pa·s] | 73.5 | 74.1 | 33.3 | 54.2 |
| TFT [min.] | 190 | 40 | 27 | 27 |
| Shore A | n.m.¹ | 20 | 68 | 58 |
| Zugfestigkeit [MPa] | n.m.¹ | 0.9 | 2.2 | 1.7 |
| Bruchdehnung [%] | n.m.¹ | 157 | 59 | 67 |
| E-Modul [MPa] | n.m.¹ | 0.5 | 5.9 | 2.8 |

## Patentansprüche

1. Zusammensetzung umfassend
- mindestens ein silanfunktionelles Polymer P1; und
- mindestens ein silanfunktionelles Polymer P2 mit Endgruppen der Formel (I), 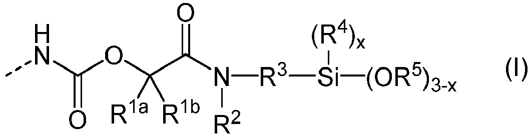 wobei
R^{1a} und R^{1b} unabhängig voneinander jeweils für ein Wasserstoffatom oder einen einwertigen Kohlenwasserstoffrest mit 1 bis 12 C-Atomen, oder zusammen für einen Alkylenrest mit 2 bis 6 C-Atomen stehen, R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
R⁴ für einen Alkylrest mit 1 bis 8 C-Atomen steht,
R⁵ für einen Alkylrest mit 1 bis 10 C-Atomen, der gegebenenfalls Ethergruppen enthält, steht, und
x für 0, 1 oder 2 steht;
wobei das Gewichtsverhältnis zwischen dem silanfunktionellen Polymer P1 und dem silanfunktionellen P2 im Bereich von 99:1 bis 10:90 liegt, und wobei das silanfunktionelle Polymer P1 keine Endgruppen der Formel (I) aufweist.

2. Zusammensetzung gemäss Anspruch 1, **dadurch gekennzeichnet, dass** das silanfunktionelle Polymer P1 ein Silangruppen-haltiger Polyether ist.

3. Zusammensetzung gemäss Anspruch 2, **dadurch gekennzeichnet, dass** das silanfunktionelle Polymer P1 ausgewählt ist aus der Gruppe bestehend aus
- Silangruppen-haltigen Polyethern erhalten aus der Umsetzung von Allylgruppen-haltigen Polyethern mit Hydrosilanen, gegebenenfalls unter Kettenverlängerung;
- Silangruppen-haltigen Polyethern erhalten aus der Copolymerisation von Alkylenoxiden und Epoxysilanen, gegebenenfalls unter Kettenverlängerung;
- Silangruppen-haltigen Polyethern erhalten aus der Umsetzung von Polyetherpolyolen mit Isocyanatosilanen, gegebenenfalls unter Kettenverlängerung mit Diisocyanaten; und
- Silangruppen-haltigen Polyethern erhalten aus der Umsetzung von Isocyanatgruppen-haltigen Urethan-Polyethern mit Aminosilanen oder Hydroxysilanen oder Mercaptosilanen.

4. Zusammensetzung gemäss Anspruch 3, **dadurch gekennzeichnet, dass** das silanfunktionelle Polymer P1 entweder ein Silangruppen-haltiger Polyether erhalten aus der Umsetzung von Allylgruppen-haltigen Polyethern mit Hydrosilanen oder ein Silangruppen-haltiger Polyether erhalten aus der Umsetzung von Polyetherpolyolen mit Isocyanatosilanen ist.

5. Zusammensetzung gemäss einem der vorhergehenden Ansprüche, **dadurch gekennzeichnet, dass** das silanfunktionelle Polymer P2 ein Silangruppen-haltiger Polyether und/oder Polyester und/oder Polycarbonat ist.

6. Zusammensetzung gemäss einem der vorhergehenden Ansprüche, **dadurch gekennzeichnet, dass** R^{1a} für einen Methyl-Rest und R^{1b} für ein Wasserstoffatom stehen.

7. Zusammensetzung gemäss einem der vorhergehenden Ansprüche, **dadurch gekennzeichnet, dass** R^{1a} für einen Methyl-Rest, R^{1b} für ein Wasserstoffatom, R² für ein Wasserstoffatom, R³ für einen Rest ausgewählt aus der Gruppe bestehend aus 1,3-Propylen, 2-Methyl-1,3-propylen, 1,4-Butylen, 3-Methyl-1,4-butylen und 3,3-Dimethyl-1,4-butylen, R⁵ für einen Methyl-Rest oder für einen Ethyl-Rest und x für 0 stehen.

8. Zusammensetzung gemäss einem der vorhergehenden Ansprüche, **dadurch gekennzeichnet, dass** das Gewichtsverhältnis zwischen dem silanfunktionellen Polymer P1 und dem silanfunktionellen P2 im Bereich von 98:2 bis 20:80 liegt.

9. Zusammensetzung gemäss einem der vorhergehenden Ansprüche, **dadurch gekennzeichnet, dass** das silanfunktionelle Polymer P1 und das silanfunktionelle Polymer P2 beide entweder ausschliesslich Methoxysilangruppen oder ausschliesslich Ethoxysilangruppen enthalten.

10. Zusammensetzung gemäss einem der vorhergehenden Ansprüche, **dadurch gekennzeichnet, dass** sie mindestens einen weiteren Bestandteil ausgewählt aus Füllstoffen, Vernetzern, Weichmachern, Lösemitteln, Katalysatoren, Haftvermittlern, Trocknungsmitteln, Stabilisatoren, Pigmenten und Rheologiehilfsmitteln enthält.

11. Zusammensetzung gemäss Anspruch 10, **dadurch gekennzeichnet, dass** sie einen Gehalt an silanfunktionellen Polymeren im Bereich von 5 bis 95 Gewichts-% aufweist.

12. Zusammensetzung gemäss einem der vorhergehenden Ansprüche, **dadurch gekennzeichnet, dass** sie frei ist von Schwermetall-haltigen organischen Verbindungen.

13. Ausgehärtete Zusammensetzung, erhalten aus einer Zusammensetzung gemäss einem der Ansprüche 1 bis 12 nach deren Reaktion mit Feuchtigkeit.

14. Verwendung einer Zusammensetzung gemäss einem der Ansprüche 1 bis 12 als Klebstoff oder Dichtstoff oder als Beschichtung.

15. Methode zur Beschleunigung der Aushärtung einer feuchtigkeitshärtenden Zusammensetzung enthaltend mindestens ein silanfunktionelles Polymer P1, indem der Zusammensetzung mindestens ein silanfunktionelles Polymer P2 mit Endgruppen der Formel (I) zugesetzt wird, 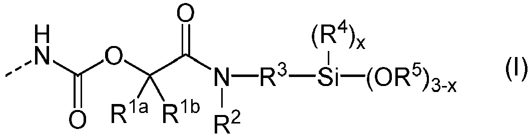 wobei
R^{1a} und R^{1b} unabhängig voneinander jeweils für ein Wasserstoffatom oder einen einwertigen Kohlenwasserstoffrest mit 1 bis 12 C-Atomen, oder zusammen für einen Alkylenrest mit 2 bis 6 C-Atomen stehen,
R² für ein Wasserstoffatom oder für einen einwertigen Kohlenwasserstoffrest mit 1 bis 12 C-Atomen, der gegebenenfalls Ethergruppen, Estergruppen, Nitrilgruppen, Aminogruppen oder Silangruppen enthält, steht,
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, insbesondere Stickstoffatomen, steht,
R⁴ für einen Alkylrest mit 1 bis 8 C-Atomen steht,
R⁵ für einen Alkylrest mit 1 bis 10 C-Atomen, der gegebenenfalls Ethergruppen enthält, steht, und
x für 0, 1 oder 2 steht;
wobei das silanfunktionelle Polymer P1 keine Endgruppen der Formel (I) aufweist.

## Claims

1. A composition comprising
- at least one silane-functional polymer P1; and
- at least one silane-functional polymer P2 having end groups of the formula (I) 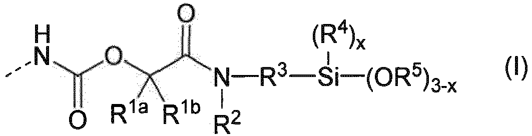 where
R^{1a} and R^{1b} are each independently a hydrogen atom or a monovalent hydrocarbyl radical having 1 to 12 carbon atoms, or together are an alkylene radical having 2 to 6 carbon atoms,
R² is a hydrogen atom or a monovalent hydrocarbyl radical which has 1 to 12 carbon atoms and optionally contains ether groups, ester groups, nitrile groups, amino groups or silane groups,
R³ is a linear or branched alkylene or cycloalkylene radical having 1 to 20 carbon atoms, optionally having aromatic components, and optionally having one or more heteroatoms, especially nitrogen atoms,
R⁴ is an alkyl radical having 1 to 8 carbon atoms,
R⁵ is an alkyl radical which has 1 to 10 carbon atoms and optionally contains ether groups, and
x is 0, 1 or 2,
where the weight ratio between the silane-functional polymer P1 and the silane-functional P2 is in the range from 99:1 to 10:90, and
where the silane-functional polymer P1 does not have any end groups of the formula (I).

2. The composition as claimed in claim 1, **characterized in that** the silane-functional polymer P1 is a polyether containing silane groups.

3. The composition as claimed in claim 2, **characterized in that** the silane-functional polymer P1 is selected from the group consisting of
- polyethers containing silane groups that have been obtained from the reaction of polyethers containing allyl groups with hydrosilanes, optionally with chain extension;
- polyethers containing silane groups that have been obtained from the copolymerization of alkylene oxides and epoxysilanes, optionally with chain extension;
- polyethers containing silane groups that have been obtained from the reaction of polyether polyols with isocyanatosilanes, optionally with chain extension with diisocyanates; and
- polyethers containing silane groups that have been obtained from the reaction of urethane polyethers containing isocyanate groups with aminosilanes or hydroxysilanes or mercaptosilanes.

4. The composition as claimed in claim 3, **characterized in that** the silane-functional polymer P1 is either a polyether containing silane groups that has been obtained from the reaction of polyethers containing allyl groups with hydrosilanes or a polyether containing silane groups that has been obtained from the reaction of polyether polyols with isocyanatosilanes.

5. The composition as claimed in any of the preceding claims, **characterized in that** the silane-functional polymer P2 is a polyether and/or polyester and/or polycarbonate containing silane groups.

6. The composition as claimed in any of the preceding claims, **characterized in that** R^{1a} is a methyl radical and R^{1b} is a hydrogen atom.

7. The composition as claimed in any of the preceding claims, **characterized in that** R^{1a} is a methyl radical, R^{1b} is a hydrogen atom, R² is a hydrogen atom, R³ is a radical selected from the group consisting of 1,3-propylene, 2-methyl-1,3-propylene, 1,4-butylene, 3-methyl-1,4-butylene and 3,3-dimethyl-1,4-butylene, R⁵ is a methyl radical or an ethyl radical and x is 0.

8. The composition as claimed in any of the preceding claims, **characterized in that** the weight ratio between the silane-functional polymer P1 and the silane-functional P2 is in the range from 98:2 to 20:80.

9. The composition as claimed in any of the preceding claims, **characterized in that** the silane-functional polymer P1 and the silane-functional polymer P2 both contain either exclusively methoxysilane groups or exclusively ethoxysilane groups.

10. The composition as claimed in any of the preceding claims, **characterized in that** it comprises at least one further constituent selected from fillers, crosslinkers, plasticizers, solvents, catalysts, adhesion promoters, desiccants, stabilizers, pigments and rheology aids.

11. The composition as claimed in claim 10, **characterized in that** it has a content of silane-functional polymers in the range from 5% to 95% by weight.

12. The composition as claimed in any of the preceding claims, **characterized in that** it is free of heavy metal-containing organic compounds.

13. A cured composition obtained from a composition as claimed in any of claims 1 to 12 after it has reacted with moisture.

14. The use of a composition as claimed in any of claims 1 to 12 as an adhesive or sealant or as a coating.

15. A method of accelerating the curing of a moisture-curing composition comprising at least one silane-functional polymer P1, by adding to the composition at least one silane-functional polymer P2 having end groups of the formula (I) 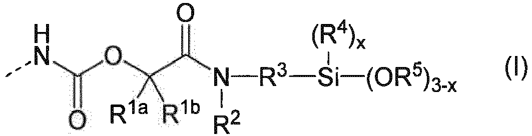 where
R^{1a} and R^{1b} are each independently a hydrogen atom or a monovalent hydrocarbyl radical having 1 to 12 carbon atoms, or together are an alkylene radical having 2 to 6 carbon atoms,
R² is a hydrogen atom or a monovalent hydrocarbyl radical which has 1 to 12 carbon atoms and optionally contains ether groups, ester groups, nitrile groups, amino groups or silane groups,
R³ is a linear or branched alkylene or cycloalkylene radical having 1 to 20 carbon atoms, optionally having aromatic components, and optionally having one or more heteroatoms, especially nitrogen atoms,
R⁴ is an alkyl radical having 1 to 8 carbon atoms,
R⁵ is an alkyl radical which has 1 to 10 carbon atoms and optionally contains ether groups, and
x is 0, 1 or 2;
where the silane-functional polymer P1 does not have any end groups of the formula (I).

## Revendications

1. Composition comprenant :
- au moins un polymère à fonction silane P1 ; et
- au moins un polymère à fonction silane P2 contenant des groupes terminaux de formule (I) 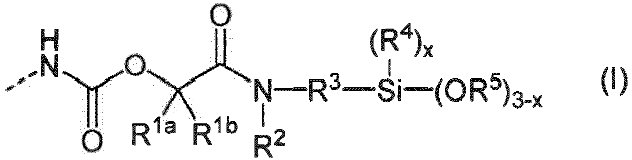 dans laquelle
R^{1a} et R^{1b} représentent chacun indépendamment l'un de l'autre un atome d'hydrogène ou un radical hydrocarboné monovalent de 1 à 12 atomes C, ou représentent ensemble un radical alkylène de 2 à 6 atomes C,
R² représente un atome d'hydrogène ou un radical hydrocarboné monovalent de 1 à 12 atomes C, qui contient éventuellement des groupes éther, des groupes ester, des groupes nitrile, des groupes amino ou des groupes silane,
R³ représente un radical alkylène ou cycloalkylène linéaire ou ramifié de 1 à 20 atomes C, contenant éventuellement des fractions aromatiques et contenant éventuellement un ou plusieurs hétéroatomes, notamment atomes d'azote,
R⁴ représente un radical alkyle de 1 à 8 atomes C,
R⁵ représente un radical alkyle de 1 à 10 atomes C, qui contient éventuellement des groupes éther, et
x représente 0, 1 ou 2 ;
le rapport en poids entre le polymère à fonction silane P1 et le polymère à fonction silane P2 se situant dans la plage allant de 99:1 à 10:90, et
le polymère à fonction silane P1 ne comprenant pas de groupes terminaux de formule (I).

2. Composition selon la revendication 1, **caractérisée en ce que** le polymère à fonction silane P1 est un polyéther contenant des groupes silane.

3. Composition selon la revendication 2, **caractérisée en ce que** le polymère à fonction silane P1 est choisi dans le groupe constitué par :
- les polyéthers contenant des groupes silane obtenus par la réaction de polyéthers contenant des groupes allyle avec des hydrosilanes, éventuellement avec allongement de chaînes ;
- les polyéthers contenant des groupes silane obtenus par la copolymérisation d'oxydes d'alkylène et d'époxysilanes, éventuellement avec allongement de chaînes ;
- les polyéthers contenant des groupes silane obtenus par la réaction de polyéther-polyols avec des isocyanatosilanes, éventuellement avec allongement de chaînes avec des diisocyanates ; et
- les polyéthers contenant des groupes silane obtenus par la réaction de polyéthers d'uréthane contenant des groupes isocyanate avec des aminosilanes ou des hydroxysilanes ou des mercaptosilanes.

4. Composition selon la revendication 3, **caractérisée en ce que** le polymère à fonction silane P1 est soit un polyéther contenant des groupes silane obtenu par la réaction de polyéthers contenant des groupes allyle avec des hydrosilanes, soit un polyéther contenant des groupes silane obtenu par la réaction de polyéther-polyols avec des isocyanatosilanes.

5. Composition selon l'une quelconque des revendications précédentes, **caractérisée en ce que** le polymère à fonction silane P2 est un polyéther et/ou un polyester et/ou un polycarbonate contenant des groupes silane.

6. Composition selon l'une quelconque des revendications précédentes, **caractérisée en ce que** R^{1a} représente un radical méthyle et R^{1b} représente un atome d'hydrogène.

7. Composition selon l'une quelconque des revendications précédentes, **caractérisée en ce que** R^{1a} représente un radical méthyle, R^{1b} représente un atome d'hydrogène, R² représente un atome d'hydrogène, R³ représente un radical choisi dans le groupe constitué par 1,3-propylène, 2-méthyl-1,3-propylène, 1,4-butylène, 3-méthyl-1,4-butylène et 3,3-diméthyl-1,4-butylène, R⁵ représente un radical méthyle ou un radical éthyle, et x représente 0.

8. Composition selon l'une quelconque des revendications précédentes, **caractérisée en ce que** le rapport en poids entre le polymère à fonction silane P1 et le polymère à fonction silane P2 se situe dans la plage allant de 98:2 à 20:80.

9. Composition selon l'une quelconque des revendications précédentes, **caractérisée en ce que** le polymère à fonction silane P1 et le polymère à fonction silane P2 contiennent tous les deux soit exclusivement des groupes méthoxysilane, soit exclusivement des groupes éthoxysilane.

10. Composition selon l'une quelconque des revendications précédentes, **caractérisée en ce qu'**elle contient au moins un autre constituant choisi parmi les charges, les agents de réticulation, les plastifiants, les solvants, les catalyseurs, les promoteurs d'adhésion, les agents siccatifs, les stabilisateurs, les pigments et les agents rhéologiques.

11. Composition selon la revendication 10, **caractérisée en ce qu'**elle présente une teneur en polymères à fonction silane dans la plage allant de 5 à 95 % en poids.

12. Composition selon l'une quelconque des revendications précédentes, **caractérisée en ce qu'**elle est exempte de composés organiques contenant des métaux lourds.

13. Composition durcie, obtenue à partir d'une composition selon l'une quelconque des revendications 1 à 12 après sa réaction avec de l'humidité.

14. Utilisation d'une composition selon l'une quelconque des revendications 1 à 12 en tant qu'adhésif ou agent d'étanchéité ou en tant que revêtement.

15. Procédé d'accélération du durcissement d'une composition durcissant à l'humidité contenant au moins un polymère à fonction silane P1, selon lequel au moins un polymère à fonction silane P2 contenant des groupes terminaux de formule (I) est ajouté à la composition 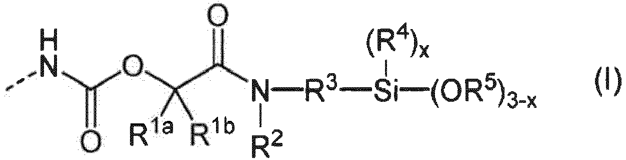 dans laquelle
R^{1a} et R^{1b} représentent chacun indépendamment l'un de l'autre un atome d'hydrogène ou un radical hydrocarboné monovalent de 1 à 12 atomes C, ou représentent ensemble un radical alkylène de 2 à 6 atomes C,
R² représente un atome d'hydrogène ou un radical hydrocarboné monovalent de 1 à 12 atomes C, qui contient éventuellement des groupes éther, des groupes ester, des groupes nitrile, des groupes amino ou des groupes silane,
R³ représente un radical alkylène ou cycloalkylène linéaire ou ramifié de 1 à 20 atomes C, contenant éventuellement des fractions aromatiques et contenant éventuellement un ou plusieurs hétéroatomes, notamment atomes d'azote,
R⁴ représente un radical alkyle de 1 à 8 atomes C,
R⁵ représente un radical alkyle de 1 à 10 atomes C, qui contient éventuellement des groupes éther, et
x représente 0, 1 ou 2 ;
le polymère à fonction silane P1 ne comprenant pas de groupes terminaux de formule (I).
